# EUROPEAN PATENT APPLICATION

(11) **EP 1 457 251 A1**
(43) Date of publication of application: **15.09.2004**
(21) Application number: 02775403.5
(22) Date of filing: 28.10.2002
(51) Int. Cl.: B01D 69/00, G01N 30/88, G01N 1/10, G01N 37/00

(54) **SEPARATING DEVICE, ANALYSIS SYSTEM, SEPARATION METHOD AND METHOD FOR MANUFACTURE OF SEPARATING DEVICE**

(30) Priority: 26.10.2001 JP 2001328747; 15.05.2002 JP 2002140814; 03.10.2002 JP 2002291465
(71) Applicant: NEC Corporation, Minato-ku, Tokyo 108-8001 (JP)
(72) Inventor: IIDA, Kazuhiro c/o NEC Corporation, Minato-ku, Tokyo 108-8001 (JP); IGUCHI, Noriyuki c/o NEC Corporation, Minato-ku, Tokyo 108-8001 (JP); BABA, Masakazu c/o NEC Corporation, Minato-ku, Tokyo 108-8001 (JP); SOMEYA, Hiroko c/o NEC Corporation, Minato-ku, Tokyo 108-8001 (JP); KAWAURA, Hisao c/o NEC Corporation, Minato-ku, Tokyo 108-8001 (JP); SANO, Toru c/o NEC Corporation, Minato-ku, Tokyo 108-8001 (JP); SAKAMOTO, Toshitsugu c/o NEC Corporation, Minato-ku, Tokyo 108-8001 (JP)
(74) Representative: Glawe. Delfs. Moll
(86) International application number: PCT/JP2002/011144
(87) International publication number: WO 2003/035233

(57) **Abstract**

There is disclosed a separation device in which separation flow paths for allowing the passage of only molecules having a predetermined size and smaller sizes are disposed between two flow channels set apart by a partition; and a separation method using the device. According to the separation technique, substances having small sizes such as cells, nucleic acids and proteins can be separated by the use of a small amount of a sample in a short time with excellent resolution, and problems of clogging and the like can also be solved.

## Description

### Technical Field

The present invention relates to a separation device which separates specific components from a plurality of components contained in a sample, a separation method, and a method of manufacturing the separation device.

### Background Art

In general, when specific components contained in a sample are analyzed, it is important to first pretreat the sample for the purpose of purifying an analysis object material beforehand. Above all, a sample derived form organisms contains a large amount of components having various sizes and indicating different properties in many cases, and hence, it is indispensable that the pretreatment is appropriately performed to enhance accuracy and efficiency of analysis.

Prior to the analysis of the biological material, for example, the following pretreatments are performed:
(i) separation of cells from the other components, and concentration of them;
(ii) separation of a solid material (fractions of cell membrane, mitochondria and endoplasmic reticulum) from a liquid fraction (cytoplasm) of components obtained by destruction of the cells, and concentration of them;
(iii) separation of high molecular weight components (deoxyribonucleic acids (DNAs), ribonucleic acids (RNAs), proteins and sugar chains) from low molecular weight components (steroids, glucose, etc.) of the components of the liquid fraction, and concentration of them; and
(iv) separation of decomposed products from undecomposed products of macromolecules.

However, each of such pretreatments usually requires a troublesome operation, an analysis object component is denaturalized sometimes, and a large amount of a sample is required. Therefore, there are many other problems to be improved. For example, in the above treatment (i), a technique such as centrifugation or serum separation is used, but in this case, the sample needs to be coagulated at room temperature for several minutes, and the sample is decomposed sometimes during the coagulation. In the treatment (ii), the centrifugation needs to be performed over several tens of minutes to several hours in an ultra centrifuge, and there has been a problem that a treatment time is long. In the treatment (iii), it is necessary to combine a chemical treatment by the use of ethanol and high-concentration salt with the centrifugation, an operation is laborious, the treatment requires a long time, and additionally the sample is denaturalized sometimes during the operation. Furthermore, since the treatment (iv) requires gel filtration and electrophoresis, the operation is laborious, and additionally it has been difficult to achieve a sufficiently high collection efficiency.

Here, in the following patent document 1, a micro film separation device is described which comprises a flow path which is formed in the surface of a substrate and along which a sample is passed; and a partition made of a porous body for dividing the flow path. In this device, the sample is passed through the partition made of the porous body to achieve the separation. However, since the device has a constitution including one inlet and one outlet of the sample, the once introduced sample inevitably passes through the partition in order to flow out of the device. Therefore, holes in the partition are clogged with the sample, and separation efficiency sometimes drops. It is feared that the partition breaks, when a pressure for introducing the sample is further applied in a state in which the clogging remarkably occurs.

### (Patent Document 1): Japanese Patent unexamined Laid-Open No. 2000-262871.

The present invention has been developed in consideration of the above-described circumstances, and an object thereof is to provide a technique for efficiently separating a sample by a simple operation. Therefore, an object of the present invention is to provide a technique for separating a sample containing a material obtained from organisms with high efficiency by a simple operation without denaturalizing components. Another object of the present invention is to provide a separation technique for realizing multistage separation of a sample by one device, in contrast to a conventional technique in which separation and purification are accomplished by the use of a plurality of separation techniques.

Additionally, an object of the present invention is to realize various separation techniques which cannot be realized by a related art.

### Disclosure of the Invention

According to the present invention, there is provided a separation device comprising a substrate having a first flow channel for the passage of a fluid as a sample to be separated, a second flow channel for the passage of a fluid containing a specific component separated from the fluid, and a partition for partitioning the first and second flow channels, wherein the partition is provided with a plurality of separation flow paths which communicate with the first and second flow channels and which allows the passage of the only specific component contained in the fluid which passes along the first flow channel.

Moreover, according to the present invention, there is provided a separation device comprising a substrate having a first flow channel for the passage of a fluid as a sample to be separated, an inlet, disposed so as to communicate with the first flow channel, for introducing the fluid as the sample to be separated into the first flow channel, an outlet, disposed so as to communicate with the first flow channel, for allowing the fluid as the sample to be separated to flow out of the first flow channel, a second flow channel for the passage of a fluid containing a specific component separated from the fluid as the sample to be separated, an inlet, disposed so as to communicate with the second flow channel, for introducing the fluid into the second flow channel, an outlet, disposed so as to communicate with the second flow channel, for allowing the fluid containing the specific component separated from the fluid as the sample to be separated to flow out of the second flow channel, and a partition for partitioning the first and second flow channels, wherein the partition is provided with a plurality of separation flow paths which communicate with the first and second flow channels and which allows the passage of the only specific component contained in the fluid which passes along the first flow channel.

### Brief Description of the Drawings

FIG.1 is a diagram showing a structure of a flow path for separation in FIG.3 described below in detail;
FIG.2 is a diagram showing the structure of the flow path for separation;
FIG.3 is a diagram showing one example of a separation device according to the present invention;
FIG.4 is a diagram showing the structure of the flow path for separation;
FIG.5 is a diagram showing the structure of the flow path for separation;
FIG.6 is an explanatory view of a separation system for a sample;
FIG.7 is an explanatory view of the separation system for the sample;

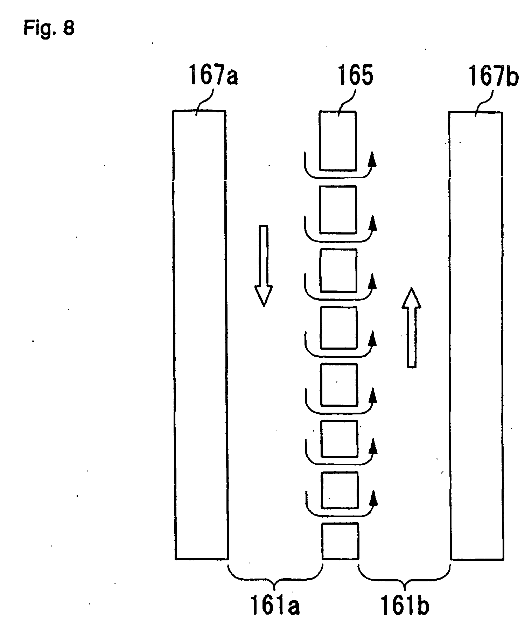

FIG.8 is an explanatory view of the separation system for the sample;
FIG.9 is an explanatory view of a method of introducing a buffer solution into a chip;
FIG.10 is a diagram showing the structure of the flow path for separation;
FIG.11 is an explanatory view of a method of manufacturing the separation device of the present invention;
FIG.12 is an explanatory view of the method of manufacturing the separation device of the present invention;
FIG.13 is a diagram showing the structure of the flow path for separation;
FIG.14 is a diagram showing the structure of the flow path for separation;
FIG.15 is a diagram showing the structure of the flow path for separation;
FIG.16 is a diagram showing the structure of a joint;
FIG.17 is a diagram showing the structure of the flow path for separation;
FIG.18 is a diagram showing the structure of the flow path for separation;
FIG.19 is a diagram showing the structure of the flow path for separation;
FIG.20 is a diagram showing the structure of the separation device for use in Example 1;
FIG.21 is a scanning type electronic microscope photograph of a partition of the separation device for use in Example 1;
FIG.22 is an optical microscope photograph of observation of a separated situation of blood plasma of Example 1;
FIG.23 shows a test result by glucose and protein detection sheets of Example 1;
FIG.24 is a diagram showing the structure of a separation flow path;
FIG.25 is a diagram showing the structure of the separation flow path;
FIG.26 is a diagram showing the separation device according to an embodiment of the present invention;
FIG.27 is a diagram showing the separation device according to the embodiment of the present invention;
FIG.28 is a diagram showing the separation device according to the embodiment of the present invention;
FIG.29 is an explanatory view of a state at a time when a sample is introduced into the separation device according to the embodiment of the present invention;
FIG.30 is an explanatory view of a procedure of analysis by the use of the separation device according to the embodiment of the present invention;
FIG.31 is a diagram showing the structure of a separation flow path section of the separation device according to the embodiment of the present invention;
FIG.32 is a diagram showing the structure of the separation flow path section of the separation device according to the embodiment of the present invention;
FIG.33 is a diagram showing the structure of the separation flow path section of the separation device according to the embodiment of the present invention;
FIG.34 is a diagram showing the structure of the separation flow path section of the separation device according to the embodiment of the present invention;
FIG.35(a) is a diagram showing the structure of the separation flow path section of the separation device according to the embodiment of the present invention, and (b) is a diagram showing a method of forming the separation flow path section of FIG.35(a) together with the structure;
FIG.36 is an explanatory view of a method of disposing a partition including holes of a nano-order;
FIG.37 is an explanatory view of the method of disposing the partition including the holes of the nano-order;
FIG.38 is an enlarged view of the partition made of aluminum oxide in FIG.37(g);
FIG.39 is a diagram showing a constitution of an analysis system according to the embodiment of the present invention; and
FIG.40 is a diagram showing the constitution of the analysis system according to the embodiment of the present invention.

### Best Mode for Carrying out the Invention

A separation device according to the present invention includes a partition in which a plurality of separation flow paths are disposed between a first flow channel for the passage of a fluid as a sample to be separated and a second flow channel for the passage of a fluid containing a specific component separated from the fluid, and therefore the specific component contained in the sample can be separated and moved to the second flow channel from the first flow channel. The specific component moved into the second flow channel is thereafter treated, for example, dispensed or subjected to an analysis such as a spectral analysis and subsequently collected. When the device of the present invention is used, a biological material and other samples can be separated by a simple operation with good efficiency.

As a separation system in the device, various systems are usable. For example, the system is capable of adjusting sectional shapes or areas of the separation flow paths to be substantially equal and screening the components in the sample fluid by sizes, ease of deformation or the like.

In the separation device of the present invention, there are further disposed, in the substrate, a third flow channel which is disposed adjacent to the second flow channel and which is for the passage of the fluid containing the specific component separated from the fluid which is passing along the second flow channel, and a partition for partitioning the second and third flow channels. The partition can be constituted to be provided with a plurality of separation flow paths which communicate with the second and third flow channels and which allows the passage of the only specific component contained in the fluid which passes along the second flow channel.

By this constitution, the next step of separation treatment can be continuously executed for the once separated sample. Therefore, the separation treatment which has heretofore required a plurality of separation devices can be executed by one device, and the efficiency of the separation treatment can be remarkably enhanced.

Moreover, according to the present invention, there is provided a separation method in which the separation device is used, comprising the steps of passing, along the second flow channel, a fluid having an osmotic pressure higher than that of a fluid as the sample to be separated; and passing, along the third flow channel, a fluid having an osmotic pressure higher than that of the fluid which passes along the second flow channel. According to the method, the osmotic pressure is generated in a direction toward the third flow channel from the first flow channel. Therefore, the component capable of passing through the partition is urged to move to the same direction by the osmotic pressure. Therefore, efficiency in separation is further enhanced.

According to the present invention, there is provided a separation device comprising a substrate in which a plurality of flow channels are disposed, wherein an inlet of a sample is disposed in any portion of the plurality of flow channels, and a plurality of separation flow paths which communicate with the respective flow channels and which allows the passage of an only specific component contained in the sample are disposed in a partition disposed between the adjacent flow channels. When the device of the present invention is used, the biological material and other samples are separable by the simple operation with good efficiency.

The above-described separation device according to the present invention is similar to a separation device using an ultrafiltration film in principle, but is different in that the separation flow path corresponding to the filtration film is realized by the channel disposed in the substrate. Since the system for separating the sample by the channel formed in the substrate surface is used, the present invention produces the following function/effect.

Firstly, the size (width, depth) of the separation flow path can be set to a desired value with good controllability. Therefore, the separation high in precision is realized.

Secondly, the section of the separation flow path extending from the flow path on a separation incomplete side to the flow path on a separation complete side can be formed into a desired shape with good controllability. For example, the separation flow path having a valve structure and including a backward flow preventing function can be formed. The separation flow path having such a shape as to easily enable reverse cleaning can be formed. The realization of this structure in the ultrafiltration film involves many technical difficulties.

Thirdly, the separation device superior in manufacturing stability and mass production can be formed. When glass, silicon or the like is used as the substrate, the device constituted as described above can be prepared by the use of dry or wet etching. When the substrate is constituted by a thermoplastic resin, the device can be prepared by injection molding. Furthermore, when the substrate is constituted by a thermosetting resin, the device can be formed by pressurization in an abutment state of a mold including a predetermined concave/convex surface.

In the separation device of the present invention, three or more flow channels can be disposed. By this constitution, the next step of separation treatment can be continuously executed for the once separated sample. Therefore, the separation treatment which has heretofore required a plurality of separation devices can be executed by one device, and the efficiency of the separation treatment can be remarkably enhanced.

In the separation device of the present invention, the plurality of separation flow paths can be formed so as to allow the passage of the only components having a predetermined size and smaller sizes. By this constitution, the sample can be screened from the sample containing a plurality of components in accordance with the size. Examples of the "constitution formed so as to allow the passage of the only component having the predetermined size and smaller sizes" include a constitution in which the plurality of separation flow paths are formed into about the same sectional shape and in about the same sectional area. Accordingly, the components having the predetermined size and smaller sizes are separable more efficiently.

In the separation device of the present invention, the separation flow path can be formed as a channel-shaped flow path formed in the substrate surface. Accordingly, it is possible to form the separation flow path by a combination of lithography and etching techniques, and the separation flow path having a desired size can be formed precisely and stably. In the present invention, with the use of the system for the separation by the size of the component or the like, the separation flow paths are desired to be precisely formed in the sectional shapes and areas. When components having a micro size such as DNAs or proteins are separated, the separation flow path is desired to be precisely processed in a size of a nano-level. As described above, when the separation flow path is formed as the channel-shaped flow path in the substrate surface, there can be provided the separation device which meets this demand.

In the separation device of the present invention, the constitution may further comprise external force applying means for applying an external force to the fluid charged in each flow channel. The external force applying means is also capable of applying the external force in such a manner that a flow direction of the fluid in one flow channel and a flow direction of the fluid in the adjacent flow channel are mutually opposite directions.

In the separation device of the present invention, an opening of the separation flow path can be constituted such that one flow channel side is enlarged as compared with the opening of the other flow channel side. The separation flow path may be formed into a tapered shape toward the other flow channel side from one flow channel side.

In the separation device of the present invention, the separation flow path is disposed so as to form an acute angle to the flow direction of the fluid in one flow channel which communicates with the separation flow path and to form an obtuse angle to the flow direction of the fluid in the other flow channel.

In the separation device of the present invention, concave portions can be formed in an inner wall of the separation flow path.

In the separation device of the present invention, the flow channel and separation flow channel can be formed by the etching.

In the separation device of the present invention, the inner wall of one flow channel has a hydrophilic surface, and the inner wall of the adjacent flow channel has a hydrophobic surface.

Moreover, according to the present invention, there is provided a method of manufacturing a separation device, comprising a step of disposing a mask patterned in a predetermined shape on a substrate surface; and a step of etching the substrate surface by the use of the mask to form a plurality of flow channels and a plurality of separation flow paths which communicate with the adjacent flow channels.

The manufacturing method of the present invention may comprise: a step of forming a resist film on the substrate surface; a step of pressing the resist film in a state in which a molding surface provided with concave/convex portions abuts on the resist film to impart a concave/convex shape to the resist film; a step of removing the resist film of the concave portions to dispose a resist opening; and a step of etching the substrate by the use of the resist film provided with the opening as a mask to form a plurality of flow channels and a plurality of separation flow paths which communicate with the adjacent flow channels.

Moreover, the separation device according to the present invention can be formed as follows. For example, the method may include a step of pressing the substrate having at least a surface portion made of a resin material in a state in which the molding surface provided with the concave/convex portions abuts on the substrate to form a plurality of flow channels and a plurality of separation flow paths communicating with the adjacent flow channels in the surface portion.

According to the present invention, there is provided a method of separating a specific component from a fluid as a sample to be separated by the use of a separation device comprising first and second flow channels and a partition disposed between these flow paths, the partition being provided with a plurality of separation flow paths communicating with the first and second flow channels, the method comprising a step of moving the fluid as the sample to be separated in the first flow channel and moving the specific component contained in the fluid as the sample to be separated into the second flow channel via the separation flow path.

According to the separation method, a plurality of components contained in the fluid as the sample to be separated can be separated into a material capable of passing through the separation flow path and a material incapable of passing therethrough in accordance with size, softness, easiness of deformation, degree of hydrophilicity and the like. In the separation method, the predetermined component moved into the second flow channel is thereafter dispensed or subjected to an analysis such as a spectral analysis and subsequently collected.

In the separation method, the plurality of separation flow paths can be formed so as to allow the passage of the only component having the predetermined size and smaller sizes.

Moreover, in the separation method of the present invention, the specific component may be proteins or DNAs.

According to the present invention, there is provided a method of separating a specific component from a fluid as a sample to be separated by the use of a separation device comprising first and second flow channels and a partition disposed between these flow paths, the partition being provided with a plurality of separation flow paths which communicate with the first and second flow channels, the method comprising a step of moving, in the first flow channel, the fluid as the sample to be separated and reactive particles which react with the specific component contained in the fluid as the sample to be separated to discharge a reaction product; a step of reacting the specific component with the reactive particles to discharge the reaction product from the reactive particles; and a step of collecting the reaction product via the first or second flow channels. Here, the sample to be separated may be introduced simultaneously with the reactive particles, or may also be introduced after moving the reactive particles.

Moreover, according to the present invention, there is provided a method of separating a specific component from a fluid as a sample to be separated by the use of a separation device comprising first and second flow channels and a partition disposed between these flow paths, the partition being provided with a plurality of separation flow paths which communicate with the first and second flow channels, the method comprising a step of introducing, into the first flow channel, reactive particles which react with the specific component contained in the fluid as the sample to be separated to discharge a reaction product, and immobilizing the reactive particles in the separation flow path; a step of moving the fluid as the sample to be separated in the second flow channel and the separation flow path; a step of reacting the specific component contained in the sample to be separated with the reactive particles to discharge the reaction product from the reactive particles; and a step of collecting the reaction product via the first or second flow channels.

According to the separation method, even when the specific component has a micro amount, contamination of other components in the sample to be separated is inhibited, and the separation can be performed with good efficiency. Moreover, even when the specific component has a molecular size of a nano-order, the separation device is usable in accordance with the molecular size, and therefore the component is separable with good efficiency.

In the separation method of the present invention, the reactive particles may be cells. The reactive particles contain polymeric beads or glass beads, and an enzyme or substrate corresponding to the specific component.

Moreover, in the separation method of the present invention, a color development reaction is usable in the reaction. Accordingly, the color development of the reactive particles is observed, and the amount of the specific component can be detected.

In the separation method, an opening of the separation flow path can be constituted such that a first flow channel side is enlarged as compared with the opening of a second flow channel side. By this constitution, since the reactive particles are immobilized to the opening of the separation flow path, the color development of the particles can easily be observed. Furthermore, since this constitution also imparts a function of a backflow prevention valve of the component to the separation flow path, separation precision can be enhanced.

According to the present invention, there is provided a method of separating a specific component from a fluid as a sample to be separated by the use of a separation device comprising first and second flow channels and a partition disposed between these flow paths, the partition being provided with a plurality of separation flow paths which communicate with the first and second flow channels, the method comprising a step of moving, in the first flow channel, the fluid as the sample to be separated and binding particles which specifically bind to the specific component contained in the fluid as the sample to be separated; a step of binding the specific component to the binding particles; and a step of releasing the specific component from the binding particles to collect the specific component via the first or second flow channel. Here, the sample to be separated may be introduced simultaneously with the binding particles, or may also be introduced after moving the binding particles.

Moreover, according to the present invention, there is provided a method of separating a specific component from a fluid as a sample to be separated by the use of a separation device comprising first and second flow channels and a partition disposed between these flow paths, the partition being provided with a plurality of separation flow paths which communicate with the first and second flow channels, the method comprising a step of introducing, into the first flow channel, binding particles which specifically bind to the specific component contained in the fluid as the sample to be separatedm, and immobilizing the binding particles in the separation flow paths; a step of moving the fluid as the sample to be separated in the second flow channel and the separation flow paths to bond the specific component contained in the fluid as the sample to be separated to the binding particles; and a step of releasing the specific component from the binding particles to collect the specific component via the first or second flow channel.

According to the separation method, even when the specific component has the micro amount, the contamination of the other components in the sample to be separated is inhibited, and the separation can be performed with good efficiency. Even when the specific component has the molecular size of the nano-order, the separation device is usable in accordance with the molecular size, and therefore the component is separable with good efficiency.

In the separation method of the present invention, the specific component is bonded to the binding particles which specifically bind to the specific component by any of antigen-antibody, enzyme-substrate, sugar chain-lectin, chromosome and nucleotide chain-nucleotide chain. The method may also include a step of developing a color of the binding particles which specifically bind to the specific component.

In the above-described separation method, an opening of the separation flow path may be constituted such that the first flow channel side is enlarged as compared with the opening of the second flow channel side. By this constitution, since the reactive particles are immobilized to the opening of the separation flow path, the color development of the particles can easily be observed. Furthermore, since this constitution also imparts the function of the backflow prevention valve of the component to the separation flow path, the separation precision can be enhanced.

In the separation method of the present invention, the sample to be separated may be a sample or a treated material obtained from organisms.

Moreover, according to the present invention, there is provided a method of separating a specific component from a fluid as a sample to be separated by the use of a separation device comprising a plurality of flow paths and a partition disposed between flow paths adjacent to each other in these flow paths, the partition being provided with a plurality of separation flow paths which communicate with the adjacent flow paths, the method comprising:
a step of moving the fluid as the sample to be separated in any of the flow paths and moving the specific component contained in the sample to be separated into the other flow path via the separation flow path; and a step of applying driving force of a direction different from a traveling direction of the flow path.

In the separation method, since the component in the sample to be separated undergoes a force in a direction different from the flow path traveling direction by the pressure, an opportunity of passage through the separation flow path increases. Therefore, efficiency in separation is enhanced.

Moreover, according to the present invention, in the separation method, pressures of two directions different from the traveling direction of the flow path are alternately applied at a predetermined interval.

Accordingly, in addition_to the enhancement of the efficiency in separation, it is possible to prevent the separation flow path from being clogged.

In the above-described separation method, an electroosmosis is usable as the pressure.

Moreover, in the separation method, an osmotic pressure is also usable as the pressure.

Furthermore, according to the present invention, the above-described separation device further comprises driving means for applying driving force of a direction different from a traveling direction of the flow channel to the fluid.

Additionally, according to the present invention, the separation device further comprises a cover on the substrate, and the surface of the cover is a hydrophobic surface.

When a solution is introduced into a certain flow channel in the analysis device, the solution is prevented from entering a flow channel adjacent to the flow channel. Furthermore, when the solution is added to the adjacent flow channel in this state, the solutions of both the flow channels are mixed with each other.

Therefore, since it is not necessary to simultaneously introduce the solution into the respective flow channels, there is an advantage that an operation is facilitated in introducing the sample, buffer solution or the like into the respective flow channels.

In the above-described separation device, a separation region for separating the sample to be separated may further be disposed in at least one of the flow channels.

Moreover, according to the present invention, there is provided a method of analyzing a sample to be analyzed by the use of the above-described separation device, the method comprising a first step of introducing the sample to be analyzed into a flow channel in which a separation region is disposed to separate the sample to be analyzed in the flow channel; and a second step of introducing a fluid containing a detection reagent for detecting the sample to be analyzed into a flow channel adjacent to the flow channel in which the separation region is disposed.

Furthermore, according to the present invention, in the analysis method, the sample to be analyzed contains a plurality of isozymes.

Additionally, according to the present invention, there is provided a separation device comprising a plurality of flow paths; and a partition disposed between flow paths adjacent to each other in these flow paths, the partition being provided with a plurality of separation flow paths which communicate with the flow paths adjacent to each other, wherein a water absorption material is disposed in at least one of the flow channels.

According to the separation device, it is possible to concentrate the sample while the sample passes along the flow path.

Moreover, according to the present invention, there is provided a separation device comprising a plurality of flow channels; and a partition disposed between flow channels adjacent to each other in these flow channels, the partition being provided with a plurality of separation flow paths which communicate with the flow channels adjacent to each other, wherein water absorption materials are disposed in at least two flow channels adjacent to each other, water absorbing powers of the water absorption materials disposed in the respective flow channels are different from each other, and the flow channel including the water absorption material is arranged in accordance with the order of the water absorbing power.

By this constitution, the sample can be concentrated more effectively.

Moreover, according to the present invention, there is provided a separation device comprising a substrate in which a flow channel is disposed, wherein a bank portion is disposed along a traveling direction of a flow path so as to divide the flow channel on the bottom surface of the flow channel, and a height of the bank portion is smaller than a depth of the flow channel.

Furthermore, there is provided a separation device comprising a substrate in which a flow channel is disposed; and a cover on the substrate, wherein a bank portion is disposed so as to divide the flow channel on the surface of the cover on the side of the substrate in a state in which the substrate abuts on the cover, and a height of the bank portion is smaller than a depth of the flow channel.

In the separation device, two flow channels are connected to each other via a gap formed between the cover and the bank portion, or a gap formed between the bank portion and the bottom surface of the flow channel. Since the gap fulfils a function similar to that of the separation flow path in the separation device, the separation can be realized.

Moreover, according to the present invention, in the separation device, the separation flow path is disposed by an anodizing process.

Since the separation flow path includes a separation flow path having a size of a nano-order, it is possible to realize the separation of proteins having a remarkably small size.

Furthermore, according to the present invention, in the separation device, the partition is a metal film which is oxidized by the anodizing process and in which a large number of concave portions are disposed.

Since the bottoms of the concave portions are made of a thin film having an atomic lattice of the order of 0.1 nm, and it is possible to separate ions via the thin film.

Moreover, according to the present invention, there is provided a separation device comprising a substrate; a first flow channel disposed in the substrate; a second flow channel disposed adjacent to the first flow channel in the substrate; a third flow channel disposed adjacent to the second flow channel in the substrate; a partition disposed between the first and second flow channels and having a plurality of openings; and a partition disposed between the second and third flow channels and having a plurality of openings, wherein a porous body is filled in the second flow channel.

In the separation device, since a large number of holes of the porous body fulfill functions of the separation flow paths. For example, when a polymeric gel film is used as the porous body, a micro mesh structure of the film corresponds to the holes. Therefore, even when a separation object has a size of the order of nanometers, it is possible to realize the separation.

Moreover, according to the present invention, there is provided an analysis system for detecting a specific component, comprising the above-described separation device; and a detection section for detecting the specific component separated by the separation device.

The flow channel in the present invention includes an inlet via which the fluid is introduced into the flow channel, and an outlet via which the fluid flows out of the flow channel. Therefore, since an excessive pressure is not applied into the flow channel of the separation device of the present invention, stable separation can be realized. Since the flow direction of the fluid which is passed along the flow channel is different from that of the separation flow path disposed in the partition, the separation flow path is not easily clogged with the sample. Furthermore, since a passage direction of the fluid can be appropriately selected, for example, the direction of the fluid which is passed along the first flow channel is set to be opposite to that of the fluid which is passed along the second flow channel adjacent to the first flow channel, and it is accordingly possible to enhance the efficiency in separation.

A plurality of flow channels in the present invention includes a flow channel for the passage of an sample stock solution and a flow channel for the passage of a separated sample obtained by removing predetermined components such as components having a predetermined size and larger sizes from the stock solution. There can be disposed a plurality of flow channels for the passage of the separated sample. For example, a flow channel can be disposed along which there is passed the separated sample obtained by subjecting the stock solution to first stage separation to prepare a sample and then removing the predetermined component from the thus prepared sample, whereby the separation device of a multistage separation system can be constituted.

In the present invention, the sample which is a separation object is a sample in which the predetermined component is dissolved or dispersed in a carrier. The carrier may be a liquid or a gas. When the device of the present invention is used in the separation of the biological material, pure water, a mixed solution of the pure water and a hydrophilic solvent, a buffer solution or the like is preferably used as the carrier. Concretely, a mixed solution of water and isopropyl alcohol, an aqueous solution containing trimethyl ammonium, boric acid, and ethylenediamine tetraacetic acid (EDTA), an aqueous solution of sodium phosphate, phosphate buffered saline and the like are preferably used.

In the separation device according to the present invention, the constitution may further comprise external force applying means for applying an external force to the fluid charged in the flow channel. Typical examples of the external force applying means may include a pump, voltage applying means and the like. The external force applying means may be disposed in the respective flow channels, or one means may also be disposed for a plurality of flow channels. When the means are disposed in the respective flow channels, the flow direction of the fluid in each flow channel is optionally changeable, and accordingly a peculiar separation performance can be realized.

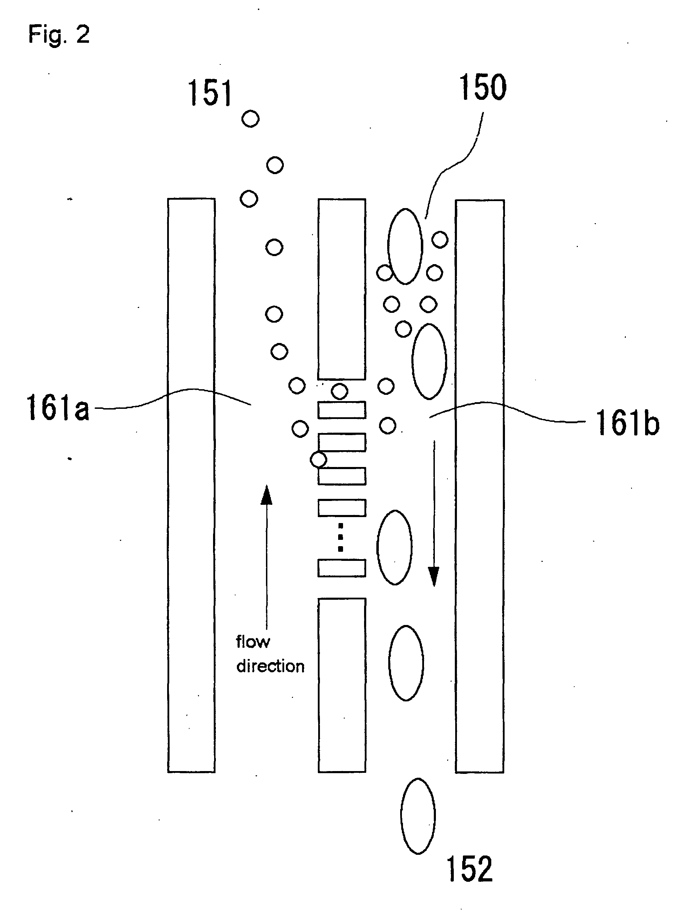

In the present invention, in addition to the external force applying means for applying the external force in the flow direction of the sample stock solution or the separated fluid, external force applying means for applying the external force in a forming direction of the separation flow path may further be disposed. For example, a constitution is also usable in which a pump is disposed in a sample flow path and a voltage is applied in the forming direction of the separation flow path. An example of this constitution will be described with reference to FIG.2. For example, the pump is disposed in the flow direction of flow channels 161a, 161b, and the voltage can be applied in a length direction of the separation flow path connecting the flow channel 161a to the flow channel 161b, that is, a direction vertical to the flow of the flow channels 161a, 161b. In this case, not only classification by the size of the material but also classification by a zeta potential peculiar to the material are used together, and the sample is separable.

For the separation flow path in the present invention, an opening of one flow channel side which communicates with the separation flow path can be enlarged as compared with the opening of the other flow channel side. The channel may be formed into a tapered shape toward the other flow channel side from one flow channel side. In this case, the separation flow path includes the function of the backflow prevention valve of the separated component. The path is usable in the separation of the components having substantially the equal size by the ease of structural deformation or softness. Here, the ease of the structural change or the softness is caused, for example, by an enthalpy change by conformation change during passage of the component through the opening disposed in the partition, difference of elastic force and the like.

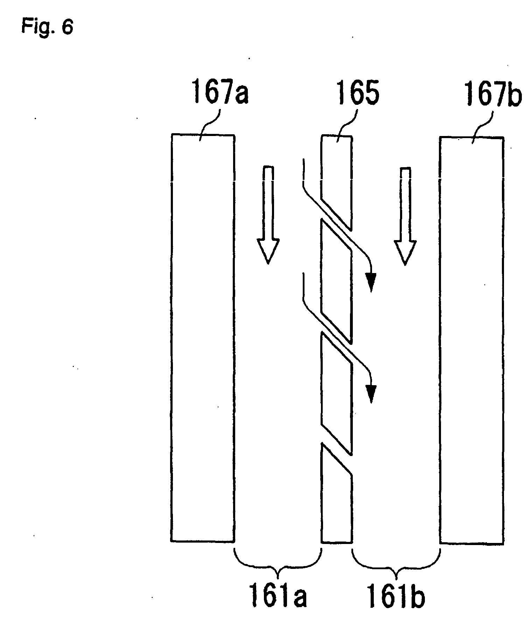

In the present invention, the separation flow path is disposed so as to form an acute angle to the flow direction of the fluid in one flow channel which communicates with the separation flow path and to form an obtuse angle to the flow direction of the fluid in the other flow channel (FIG.s 6 and 24). Here, "to form the acute angle to the flow direction of the fluid in the flow channel" indicates that an angle formed by a direction in which the separation flow path is formed from the opening of the separation flow path, and the flow direction (external force applying direction) of the sample filled in the flow channel is an acute angle. For example, a relation between the flow channel 161a and separation flow paths disposed in a partition 165 in FIG.6 is indicated. Moreover, "to form the obtuse angle to the flow direction of the fluid in the flow channel" indicates that an angle formed by the direction in which the separation flow path is formed from the opening of the separation flow path, and the flow direction (external force applying direction) of the sample filled in the flow channel is an obtuse angle. For example, a relation between the flow channel 161b and the separation flow paths disposed in the partition 165 in FIG.6 is indicated. By the use of this constitution, the separation flow path has the function of the backflow prevention valve, and the separation efficiency can further be enhanced.

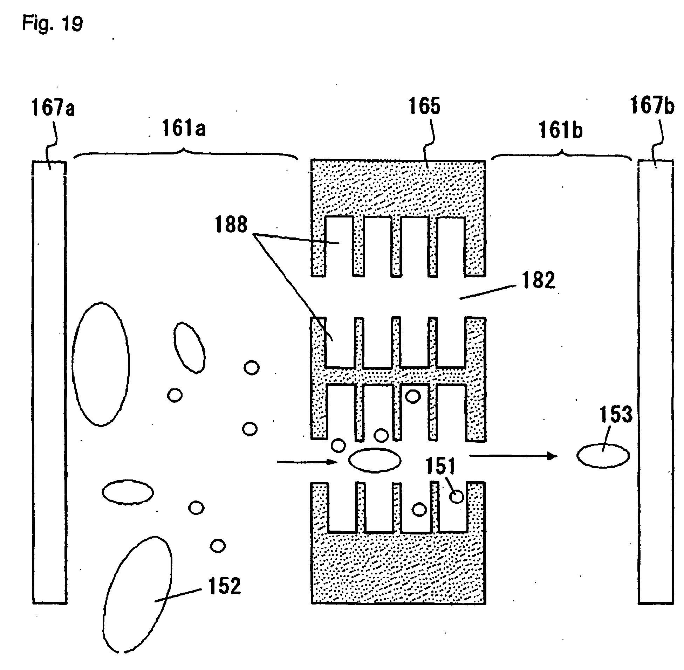

In the present invention, the separation flow path may have a constitution in which concave portions are formed in the inner wall of the separation flow path (FIG.19). In this constitution, a time required for the passage through the separation flow path differs with ease of trapping into the concave portions. That is, the component easily trapped in the concave portions is longer in the passage time through the separation flow path than the component which is not easily trapped in the concave portions. Therefore, it is possible to successively dispense a plurality of components in the flow channel 161b.

In the separation device according to the present invention, the external force applying means can apply the external force in such a manner that the flow direction of the fluid in one flow channel and that of the fluid in a flow channel adjacent to the flow channel are mutually opposite directions (FIG.s 8, 24). In this case, the separation efficiency can be enhanced by a relation of a concentration distribution of the separated components.

In the separation device according to the present invention, a constitution is usable in which the inner wall of one flow channel includes a hydrophilic surface and the inner wall of a flow channel adjacent to the flow channel has a hydrophobic surface. By the use of this constitution, the separation flow path has the function of the backflow prevention valve for the hydrophilic material, and the separation efficiency can further be enhanced.

The separation device according to the present invention may have a constitution in which three or more flow channels are disposed. By the use of this constitution, the multistage separation can be realized by one device, and additionally it is possible to select an appropriate flow path from a plurality of flow paths in accordance with the size of the separation object component and to separate the cormponent. Accordingly, it is possible to efficiently separate various samples by one device, and cleaning is also facilitated.

The separation device of the present invention is preferably usable in separation and purification of the sample in which the components having different sizes are dissolved or dispersed in the fluid. The device is usable in the separation of the component dissolved in the liquid, solid-liquid separation, concentration of emulsion and the like.

Moreover, the device is suitable for a separating or desalting treatment of the biological material. For example, human or another animal blood, salivary juice or the like is used as the sample, and the device is suitably used in the separation/concentration of the following components:
(i) separation and concentration of cells and another component;
(ii) separation and concentration of solid materials (fractions of cell membranes, mitochondria, endoplasmic reticulum) and liquid fractions (cytoplasm) in components obtained by destruction of the cells;
(iii) separation and concentration of high molecular weight components (DNAs, RNAs, proteins or sugar chains) and low molecular weight components (steroids, glucose, etc.) in the components of the liquid fractions; and
(iv) separation of decomposed products and undecomposed products of macromolecules.

The separation device according to the present invention is also capable of separating the material having a micro size, and is also applicable to separation and purification of nucleic acids including nucleic acid fractions having various sizes, organic molecules such as amino acids, peptides and proteins, metallic ions, colloids, or the like.

It is to be noted that the separation device in the present invention may comprise a sample separation region, and a sample introductory region or external force applying means may not disposed in the device itself. For example, a system may also be assumed in which the separation device in the present invention is of a disposable cartridge type and this is incorporated in a predetermined unit for use.

In the separation device of the present invention, the separation flow path can be realized, for example, by a constitution in which a large number of columnar bodies are arranged at predetermined intervals. The interval between the columnar bodies constitutes the separation flow path. The shapes of the columnar bodies include various shapes, e.g., pseudo cylindrical shapes such as a cylinder and elliptic cylinder; conical bodies such as a circular cone, elliptic cone, and triangular pyramid; prisms such as a triangular prism and quadratic prism; and striped protrusions.

The width of the separation flow path is appropriately set in accordance with a separation purpose. For example, in treatments such as:
(i) separation and concentration of the cells and another component;
(ii) separation and concentration of solid materials (fractions of cell membranes, mitochondria, endoplasmic reticulum) and liquid fractions (cytoplasm) in the components obtained by the destruction of the cells; and
(iii) separation and concentration of high molecular weight components (DNAs, RNAs, proteins or sugar chains) and low molecular weight components (steroids, glucose, etc.) in the components of the liquid fractions,
   the width is set to:
   1 µm to 10 µm for (i);
   100 nm to 1 µm for (ii); and
   1 nm to 100 nm for (iii).

For example, it has been very difficult in the related art to form the flow path having a small width of 100 nm or less, but the present inventor has found that the separation device including this structure can be prepared by formation of the columnar body by the use of an electron beam lithography technique using calixarene which is a resist for fine processing. One example of a molecular structure of calixarene is as follows. Calixarene is used as the resist for electron beam exposure, and is preferably usable as a resist for nano-processing.

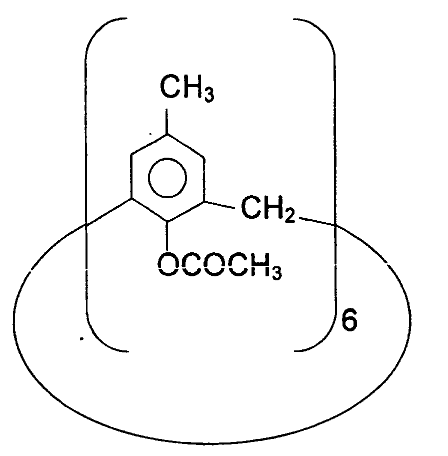

In the present invention, the flow path or the sample separation region may be formed on the surface of a silicon substrate, glass substrate such as quartz, or resin substrate such as silicon resin. A channel section is disposed in the surface of the substrate, and sealed by a surface member, and the flow path or the sample separation region can be formed in an accordingly surrounded space.

The flow path or the separation flow path in the present invention can be formed, for example, by the etching of the substrate in a predetermined pattern shape, but a preparation method is not especially limited.

Next, embodiments of the present invention will be described with reference to the drawings. It is to be noted that in the following embodiments, the following treatments are carried out:
(i) the separation and concentration of the cells and the other component;
(ii) the separation and concentration of the solid materials (fractions of cell membranes, mitochondria or endoplasmic reticulum) and the liquid fractions (cytoplasm) in the components obtained by the destruction of the cells; and
(iii) the separation and concentration of the high molecular weight components (DNAs, RNAs, proteins or sugar chains) and the low molecular weight components (steroids, glucose, etc.) in the components of the liquid fractions.

Moreover, in the following embodiments, unless otherwise mentioned, it is assumed that the separation flow paths disposed in one partition have about the same sectional shape and about the same sectional area.

### (First Embodiment)

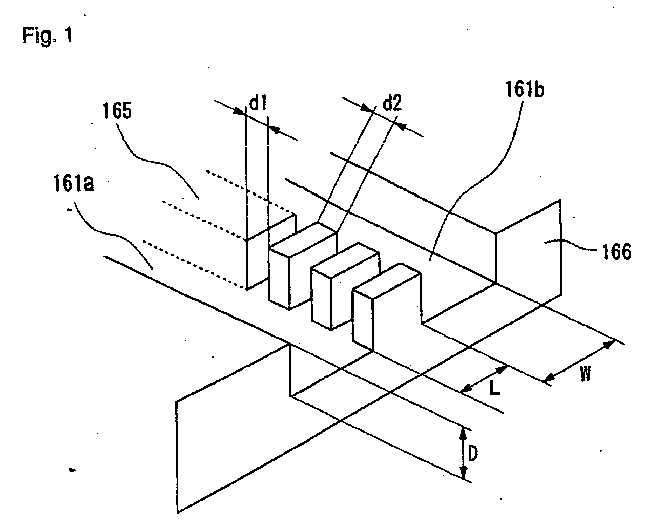

FIG.1 is a diagram showing one example of the separation device according to the present invention.

The flow channels 161a, 161b (either has a width W, depth D) are formed on a substrate 166, and the partition 165 is disposed between these channels. The separation flow paths are regularly formed in the partition 165. The separation flow paths cross the flow channels 161a, 161b at right angles, and the separation flow paths each having a width d1 are regularly formed at a predetermined interval d2. Each dimension shown in the drawing is set to an appropriate value in accordance with the sample to be separated or the like, but preferable numeric values are selected, for example, from the following ranges.
W: 10 µm to 1000 µm
L: 10 µm to 1000 µm
D: 50 nm to 1000 µm
d1: 10 nm to 1 µm
d2: 10 nm to 1 µm

Among them, the numeric value of L corresponding to the length of the separation flow path directly influences separation characteristics, and it is therefore important to precisely design the length in accordance with a separation purpose. For example, in the separation of the macromolecules, molecular conformation changes during the passage through the separation flow path, and enthalpy change occurs. Therefore, the total amount of the enthalpy change during the passage of the molecules differs with the length of the separation flow path, and the separation characteristics change. In the present invention, the flow path comprises the channel, and can therefore be prepared by the etching or the mold processing, and the shape and size can be controlled precisely. As a result, the separation device having desired separation characteristics can be manufactured stably. It is to be noted that the flow channels 161a, 161b and the separation flow paths can be formed by various methods, but when d1 or d2 is set to a value of 100 nm or less, it is preferable to use the dry etching combined with the electron beam exposure technique from a viewpoint of fine processability.

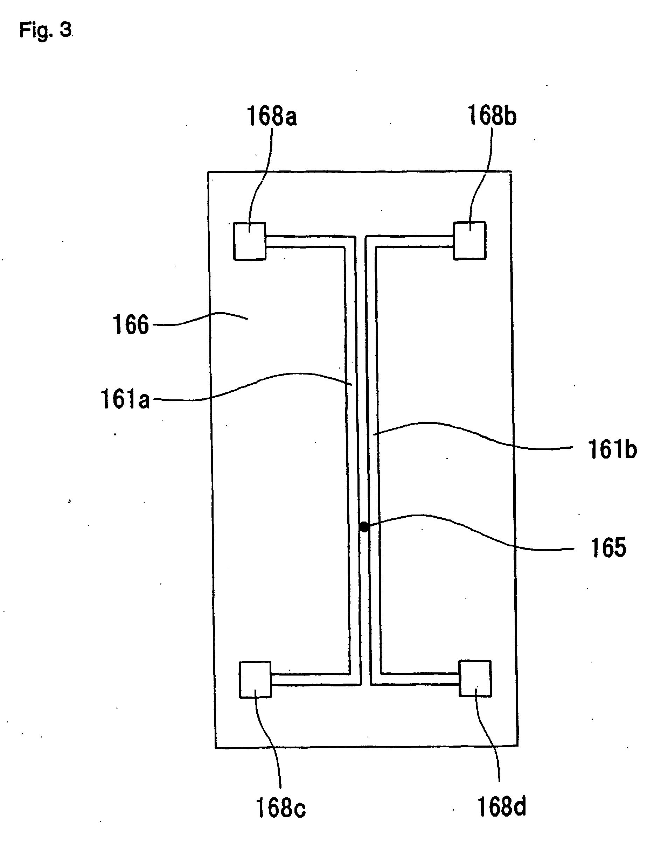

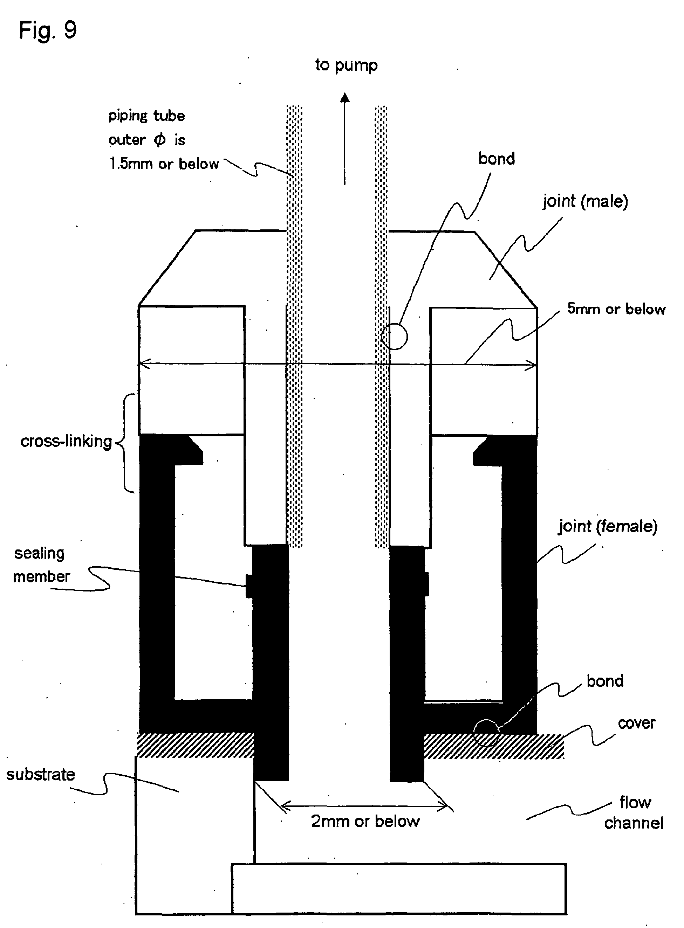

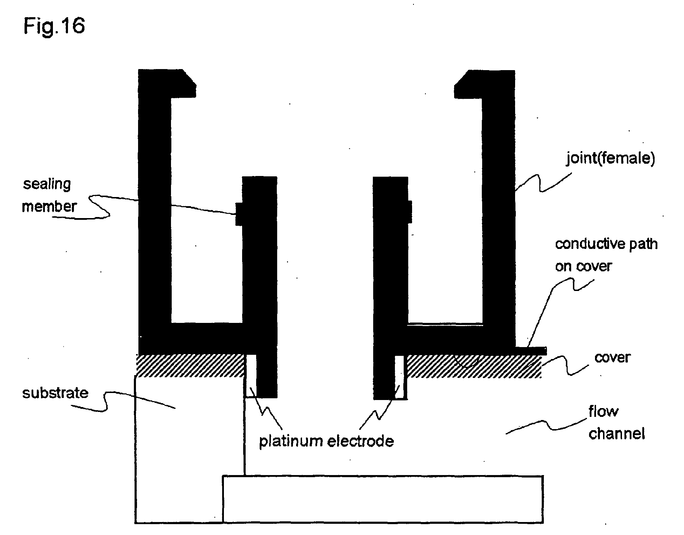

FIG.3 is a schematic constitution diagram of the whole separation device according to the present invention. The flow channels 161a and 161b are formed in the substrate 166, and the partition 165 is interposed between these channels. A large number of separation flow paths are formed at predetermined intervals in predetermined positions of the partition 165. Joints 168a to d shaped as shown in FIG.9 are disposed in opposite ends of the flow channels 161a and 161b, and are connected to a pump (not shown) via these joints. Accordingly, the external force is applied to the solvent filled in the flow channels 161a and 161b by this pump, and the solvent flows in a certain direction. It is to be noted that in the present embodiment, the pump is used as the external force applying means, and the solvent (carrier) or the component in the solvent is passed along the flow channels by the pressure, and it is, needless to say, possible to use another external force applying means. For example, a method of applying the voltage to the flow path or the like may also be used. In this case, the joints are structured, for example, as shown in FIG.16.

The separation method using the separation device having the structure shown in FIG.1 will be described with reference to FIG.2. FIG.2 is a schematic diagram schematically showing the structure of the separation device seen from the above. First, each flow channel is filled with the buffer solution which is the carrier in preparation for the separation of the sample. In FIG.2, the sample stock solution containing a mixed material 150 flows downwards in the drawing in the flow channel 161b. Then, small molecules 151 in the mixed material pass through the separation flow paths disposed in the partition shown in a middle of the drawing, and enter the adjacent flow channel 161a. The solvent which does not cause any chemical reaction with the separation object component flows upward in the drawing in the flow channel 161a. Therefore, the small molecules 151 which have entered the flow channel 161a are conveyed along the flow in an upward direction in the drawing. On the other hand, since large molecules 152 in the flow channel 161b cannot pass through the separation flow paths, the molecules flow in the flow channel 161b as they are, and they are collected in the terminal end of the flow path. As described above, the small molecules 151 are separated from the large molecules 152.

In the above-described device, the flow directions of the flow channels 161a and 161b are set to be mutually opposite. The same direction may also be set, but when the mutually opposite directions are set as in the present embodiment, the separation efficiency is enhanced. For example, when the flow direction of the flow channel 161a is set downwards in the drawing, the concentration of the small molecules 151 increases toward the traveling direction of the flow. Therefore, a concentration difference of the large molecules 152 between the flow channels 161a and 161b decreases toward the traveling direction of the flow, and an equal concentration is obtained in a certain point. In a region after this point, the large molecules 152 do not easily move into the flow channel 161a from the flow channel 161b, and cannot be separated. On the other hand, when the mutually opposite directions are set as in the present embodiment, the concentration difference of the large molecules 152 between the flow channels 161a and 161b is secured, and therefore even when the separation flow paths are formed over a region having a certain length, a high efficiency in separation can be secured.

In the separation device of the present embodiment, the separation is possible, for example, by introduction of the sample stock solution by a capillary phenomenon, and dispersion. The separation is also possible by the use of a osmotic pressure difference of the molecules.

Moreover, as the separation method using the separation device of the present embodiment, a system may also be used in which the flow path on the side to be separated is set to have a higher pressure state as compared with the flow path on the separating side and the filtration is performed by the separation flow path. Concretely, after each flow channel is filled with the buffer solution constituting the carrier, and the sample stock solution is introduced into the flow channel 161b, the opposite ends of the flow channel 161b are released, and the sample is passed along the flow channel for a certain time. Next, the opposite ends of the flow channel 161b are closed, and the buffer solution is allowed to stand still. On the other hand, the opposite ends of the flow channel 161a are released, and the buffer solution is passed along the flow channel. Since the flow channel 161b is set to have the pressure state higher than that of the flow channel 161a, the component having a predetermined size is diffused into the flow channel 161a via the flow channel. Since the buffer solution in the flow channel 161a is in the flowing state, the concentration difference of the separated component between the flow channels 161a and 161b is secured, and the separation efficiency is satisfactorily maintained. According to this system, the treatment time can be reduced in the filtration/classification of the molecules having a large size.

It is to be noted that in the present embodiment, the pressure is applied by the use of the pump to pass the fluid through the separation flow path, but a constitution in which the external force other than the pressure is applied may also be used. For example, an electric field is applied to the opposite ends of the separation device, and the fluid in the separation flow path may also flow by the use of the electrophoresis or electroosmosis current.

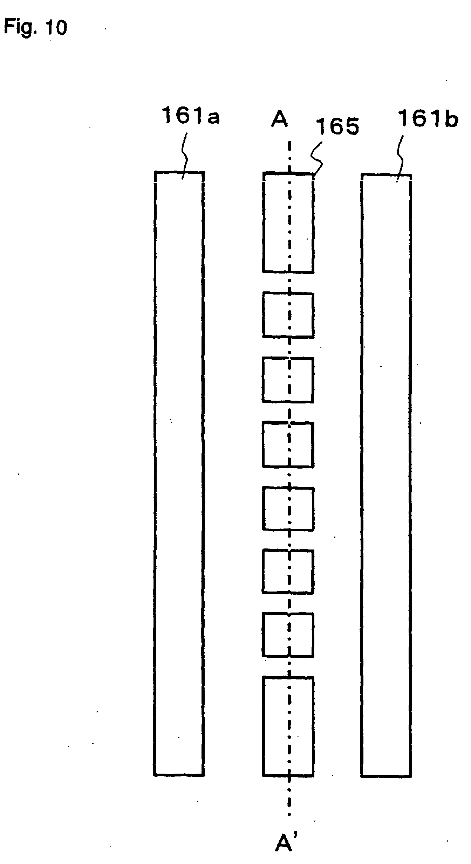

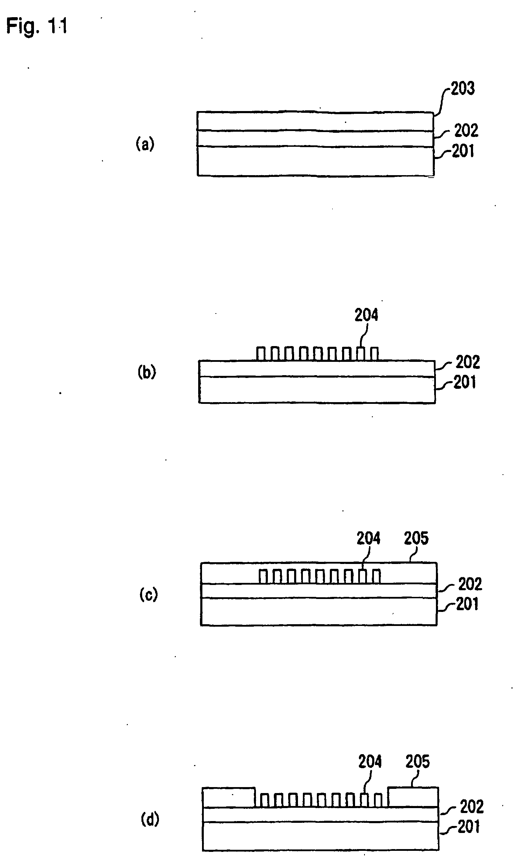

Next, a method of manufacturing the separation device according to the present embodiment will be described with reference to FIG.s 11 and 12. Here, FIG.s 11 and 12 are A-A' sectional views in the structure of the flow channel shown in FIG.10. First, as shown in FIG.11(a), a silicon oxide film 202 and a calixarene electron beam negative resist 203 (55 nm) are formed in this order on a silicon substrate 201. Film thicknesses of the silicon oxide film 202 and calixarene electron beam negative resist 203 are set to 35 nm and 55 nm. Next, an array region constituting the flow path of the sample is exposed by the use of electron beams (EB). Development is performed using xylene, and rinsing is performed by isopropyl alcohol. By this process, as shown in FIG.11(b), a patterned resist 204 is obtained.

Subsequently, the whole surface is coated with a positive photoresist 205 (FIG.11(c)). The film thickness is set to 1.8 µm. Thereafter, a partition section is mask-exposed to perform the development (FIG.11(d)).

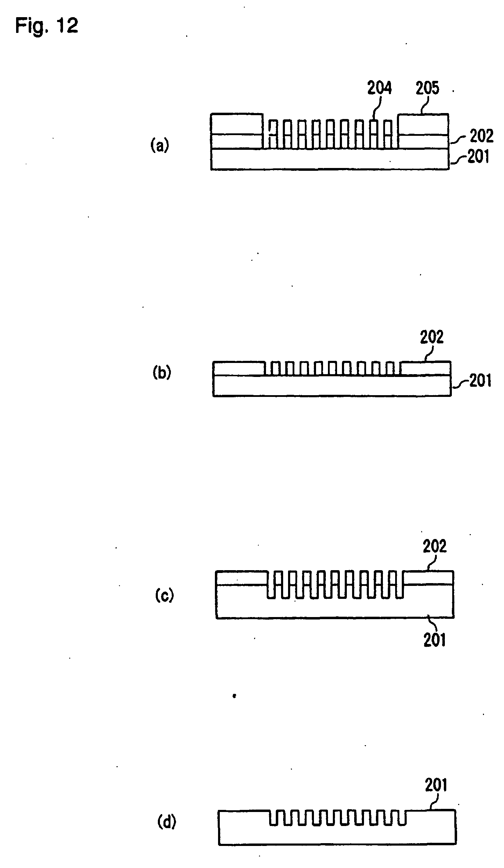

Next, the silicon oxide film 202 is RIE-etched by the use of a mixed gas of CF₄ and CHF₃. The etched film thickness is set to 35 nm (FIG.12(a)). After removing the resist by organic cleaning by the use of a mixed solution of acetone, alcohol, and water, a oxidation plasma treatment is performed (FIG.12(b)). Subsequently, the silicon substrate 201 is ECR-etched by the use of an HBr gas. The etching depth of the etched silicon substrate 201 can be set, for example, to 400 nm or more and 1 µm or less (FIG.12(c)). Subsequently, the wet etching is performed with BHF buffered hydrofluoric acid to remove the siiicon oxide film 202 (FIG.12(d)).

By the above-described process, the structure of the flow channel shown in FIG.10 is prepared. It is to be noted that after the above-described process, a surface treatment for the imparting the hydrophilic property or the like may also be performed appropriately. For example, a method may also be used in which the surface is thermally oxidized by a thermal treatment, coated with a coupling agent having a hydrophilic group, and chemically oxidized by contact with a drug solution. At this time, when the silicon substrate surface is chemically oxidized, a uniform thin film can preferably be formed on the surface. As a method of chemical oxidation, for example, concentrated nitric acid is usable, and an about 2 nm thin film can be formed. Furthermore, the flow path wall is preferably subjected to an adhesion preventive treatment in order to prevent the molecules of DNAs or proteins from adhering to the flow path wall. Accordingly, the separation device can fulfill a satisfactory efficiency in separation. An example of the hydrophilic treatment is a technique of coating the flow path wall with a material having a structure similar to that of phospholipid constituting the cell film. Examples of this material include Lipidure (registered trademark, manufactured by NOF Corp.) and the like. With the use of Lipidure (registered trademark), the material is dissolved in the buffer solution such as buffered hydrofluoric acid (TBE) in 0.5 wt%, the flow path is filled with this solution, and left to stand for several minutes, and accordingly the flow path wall can be coated. In this case, when the components to be collected are biological components such as proteins, an effect of preventing the components from being denaturalized is fulfilled, and non-peculiar adsorption of the components into the flow path of the device can be inhibited, which can enhance the collection efficiency. An example of another method of the adhesion preventive treatment is a technique of coating with a fluorocarbon resin.

It is to be noted that for the separation device having a width of the separation flow path of 1 µm or more as in a case where the separation object is the cells, the device may also be manufactured by a method by usual photolithography and wet etching.

### (Second Embodiment)

In the first embodiment, there has been used the device structure comprising two flow paths including the flow path for the passage of the sample stock solution as the object to be separated and the flow path for the passage of the separated solution, but in the present embodiment, additional separation flow paths are further disposed to realize multistage separation.

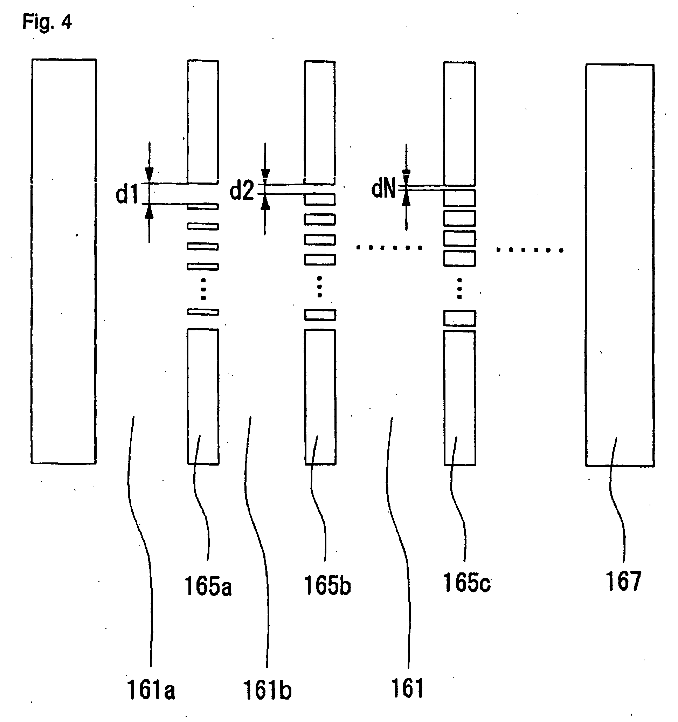

FIG.4 is a diagram showing the constitution of the flow path section of the device according to the present embodiment. In the present embodiment, the sample stock solution is passed along the flow channel 161a, and the sample subjected to the first stage separation is passed along the flow channel 161b. Here, the flow path for separation of an N-th stage is shown. The separation flow paths formed in the partition 165 are narrowed toward dN from d1. Therefore, the size of the component to be collected from each flow path is reduced toward the flow path position on the right side from the flow path positioned on the left side in the drawing.

It is difficult to realize the multistage separation by one separation device in the related art, and the multistage separation has been usually performed by a multistage process by the use of a plurality of devices. For example, since it is substantially impossible to form the separation section in a multilayered structure in the separation using a hollow fiber, it is necessary to use the multistage process in performing the multistage separation. On the other hand, according to the device including the structure described in the present embodiment, the multistage separation can be realized in one process by the use of one device, and this is efficient. Reverse cleaning after the separation is also comparatively easy. This separation device is suitable for performing, for example, the following separation/concentration:
(i) the separation/concentration of the cells and the other components;
(ii) the separation/concentration of the solid materials (fractions of cell membranes, mitochondria or endoplasmic reticulum) and the liquid fractions (cytoplasm) in the components obtained by the destruction of the cells;
(iii) the separation/concentration of the high molecular weight components (DNAs, RNAs, proteins or sugar chain) and the low molecular weight components (steroids, glucose, etc.) in the components of the liquid fractions; and
(iv) the separation of the decomposed products from the undecomposed products of the macromolecules.

### (Third Embodiment)

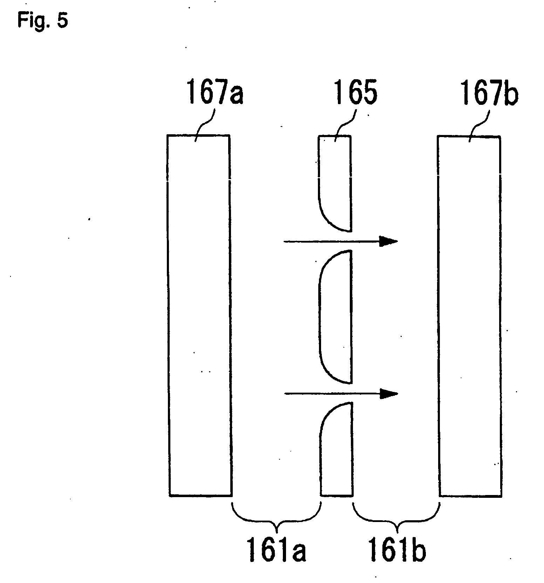

The structure of the separation flow path section of the separation device according to the present embodiment is shown in FIG.5. In the device, the sample stock solution is passed along the flow channel 161a, and the separated sample is passed along the flow channel 161b. An opening of the separation flow path is enlarged on the side of the flow channel 161a as compared with the opening of the flow channel 161b. The separation flow path is formed into the tapered shape toward the flow channel 161b from the flow channel 161a. According to this constitution, the separation flow path has the function of the backflow prevention valve, so that the separation efficiency can further be enhanced. The component having the small size in the sample moves in an arrow direction in the drawing, but has difficulty in moving in a direction opposite to the arrow. Therefore, the component having the small size moves into the flow channel 161b from the flow channel 161a with good efficiency, and the separation efficiency is remarkably enhanced.

Here, when the polymeric component or the comparatively large component is concentrated in the opening, and there is a possibility of a drop in the separation efficiency, the opening may be enlarged in two stages. For example, assuming that a particle diameter of the polymeric component in the separated solution is d in FIG.5, the opening can be formed into a small enlarged shape in a range of about 0.6 d to 0.7 d from the flow channel 161b side in the thickness direction of the partition 165, and the opening can be formed into a large enlarged shape from 0.7 d on the flow channel 161a side. By this constitution, since the polymeric component or the comparatively large component can be inhibited from being deposited/concentrated in a small opening on the flow channel 161b side, the component capable of passing through the opening can be separated more effectively.

### (Fourth Embodiment)

The structure of the separation flow path section of the separation device according to the present invention is shown in FIG.6. In this device, the sample stock solution is passed along the flow channel 161a, and the separated sample is passed along the flow channel 161b. The separation flow path is disposed so as to form an acute angle to the flow direction (white arrow in the figure) of the flow channel 161a and to form an obtuse angle to the flow direction (white arrow in the figure) of the flow channel 161b. By the use of this constitution, the separation flow path has the function of the backflow prevention valve, and the separation efficiency can further be enhanced. The component having the small size in the sample moves in the direction of a black arrow in the figure, but it is difficult for the component to move in a direction opposite to the black arrow. Therefore, the component having the small size moves into the flow channel 161b from the flow channel 161a with good efficiency, and the separation efficiency is remarkably enhanced.

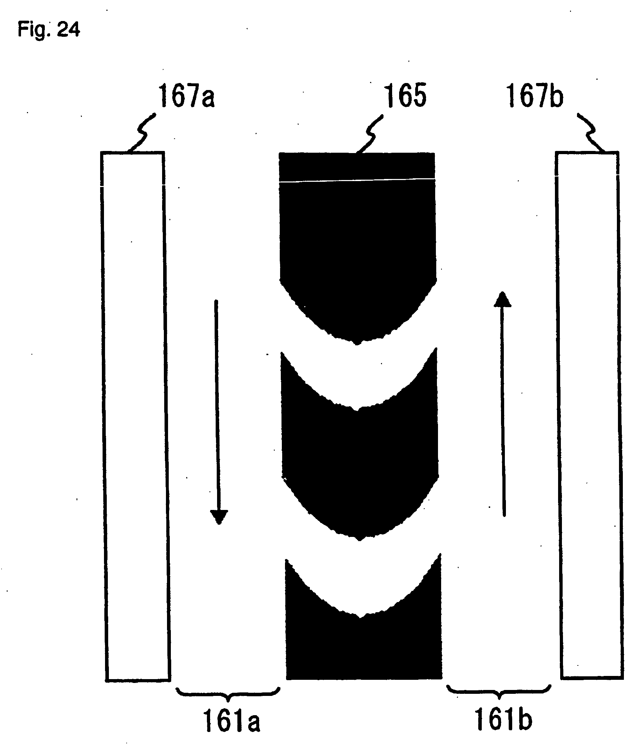

Moreover, FIG.24 shows the structure of the separation flow path section of the separation device in a case where the flow directions of the flow channels 161a and 161b are mutually opposite. In this device, the sample stock solution is passed along the flow channel 161a, and the separated sample is passed along the flow channel 161b. The separation flow paths are disposed so as to form the acute angle to the flow direction (arrow in the figure) of the flow channel 161a and to form the obtuse angle to the flow direction (arrow in the figure) of the flow channel 161b. By the use of this constitution also in the case where the flow directions of the flow channels 161a and 161b are mutually opposite, the separation efficiency is remarkably enhanced.

### (Fifth Embodiment)

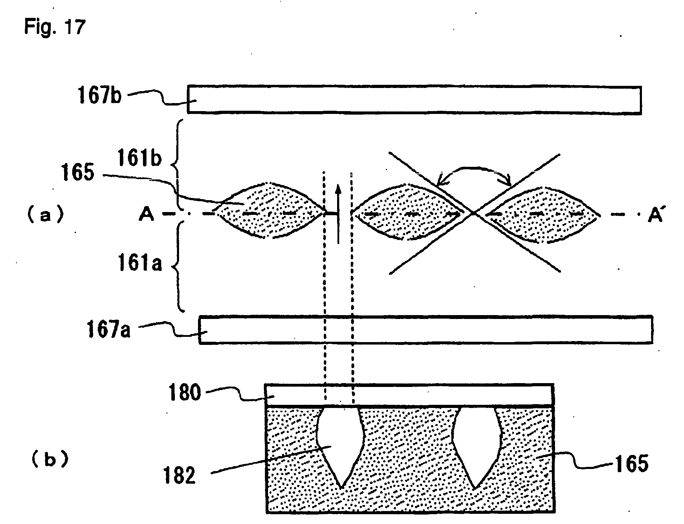

The structure of the separation flow path section of the separation device according to the present embodiment is shown in FIG.17. FIG.17(a) is a plan view, and FIG.17(b) is a sectional view. In this device, the sample stock solution is passed along the flow channel 161a, and the separated sample is passed along the flow channel 161b. Openings 182 having elliptic sections are disposed in the separation flow path. The openings 182 can be formed, for example, by the wet etching of a (110) Si substrate. That is, in FIG.17, a mask is designed in such a manner that the angle shown by an arrow is 109.5 degrees, and the (110) Si substrate is coated with the positive resist, and exposed via the mask to transfer a mask shape onto the resist. After the development of the resist, anisotropic etching is performed by the use of 25% TMAH or the like to produce a narrow slit by abutment of (111) surfaces onto each other. When the substrate is etched with an isotropic etchant such as HF+HNO₃+CH₃COOH, the slit is side-etched, and can be formed into a nearly oval shape.

By the use of this constitution, it is possible to separate a plurality of components having an approximately equal size by the shape. For example, it is possible to selectively separate spherical components from components having a shape other than the spherical shape. Examples of the material having a solid structure other than the spherical structure include flat elliptic materials such as spermatozoon, rugby ball shaped materials such as parasite nit and the like.

For example, the depth of the opening 182 can be set to about 3 µm corresponding to the width of a spermatozoon head. Furthermore, when the size of the opening 182 is adjusted, it is also possible to separate X spermatozoon from Y spermatozoon. Furthermore, when pH of the solution flowing in the flow channel 161a is set to be different from that in the flow channel 161b, abnormal spermatozoon can be prevented from being mixed. For example, when a spermatozoon-containing stock solution is passed along the flow channel 161a, and pH of the flow channel 161b is set to be lower than that of the stock solution, it is possible to selectively separate the only spermatozoon usual in chemotaxis from an acid solution.

Moreover, it is also possible to selectively detect the parasite nit, for example, from animal excrement by the use of the constitution of the present embodiment.

### (Sixth Embodiment)

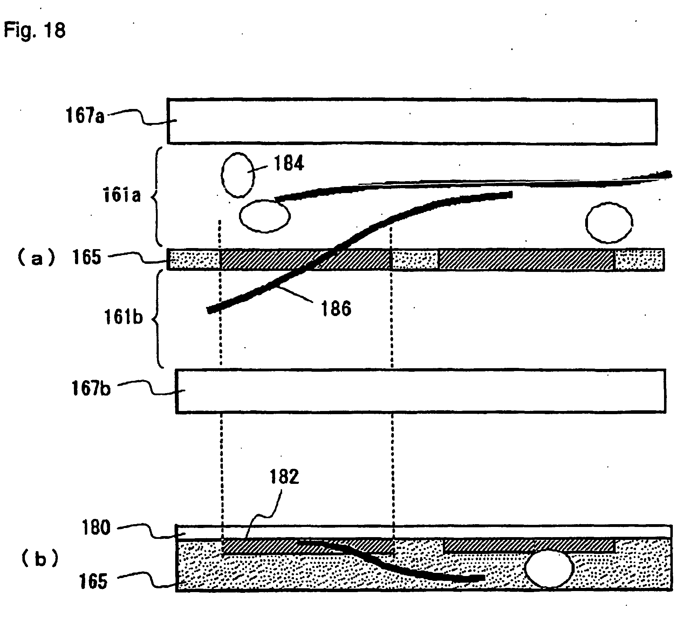

The structure of the separation flow path section of the separation device according to the present embodiment is shown in FIG.18. FIG.18(a) is a plan view, and FIG.18(b) is a sectional view. In this device, the sample stock solution is passed along the flow channel 161a, and the separated sample is passed along the flow channel 161b. The openings 182 having thin plate shapes are disposed only in an upper part of the partition 165. The openings 182 can be formed, for example, as follows. That is, the flow channels 161a and 161b and the partition 165 are formed in the substrate 166 by the wet etching process in the same manner as in the first embodiment. Subsequently, a partition 165 portion is subjected to the electron beam (EB) exposure and dry etching to form the channel in the upper part. Moreover, when a technique such as electrostatic bonding is used to form a cover 180, the opening can be obtained. Since the opening 182 has a smaller length in a thickness direction of the partition 165 as compared with a length in a width direction of the partition, a tubular material 186 can pass through the separation flow path, but a spherical material 184 cannot pass, and these materials are separable. For example, the tubular materials such as flagellum and carbon nano-tube and the materials having the thin plate shapes can be selectively separated from the materials having the other shapes.

For example, when a mixed dispersion solution of the carbon nano-tube and amorphous carbon is supplied into the flow channel 161a, it is possible to selectively collect the only carbon nano-tube from the flow channel 161b.

Moreover, when the spermatozoon is ultrasonically destroyed for a predetermined time, and cut into head and flagellum portions, and the mixture is supplied into the separation device of the present embodiment, it is possible to selectively collect an only head portion having a large gene dosage in a short time.

### (Seventh Embodiment)

The structure of the separation flow path section of the separation device according to the present embodiment is shown in FIG.19. In this device, the sample stock solution is passed along the flow channel 161a, and the separated sample is passed along the flow channel 161b. The openings 182 having shapes including diverticula 188 in the partition 165 are formed as the concave portions in the separation flow path. Here, the diverticula 188 indicate spaces branched from the separation flow path, and spaces through which the only material having a predetermined size and smaller sizes can pass. The diverticula 188 can be formed in the partition 165 using a technique such as the photolithography or the electron beam (EB) lithography. Alternatively, as another method of forming the concave portions, for example, it is also possible to form the channel in the separation flow path section of the substrate.

By this structure, the respective components can be successively dispensed from the sample stock solution containing the components having various sizes. This is because the small molecules 151 are trapped in the diverticula 188 during the passage of the sample stock solution through the separation flow path, and therefore a long time is required for the passage. On the other hand, since an approximately medium sized molecule 153 passes through the opening 182 without being trapped in the diverticula 188, the time required for the passage is short.

### (Eighth Embodiment)

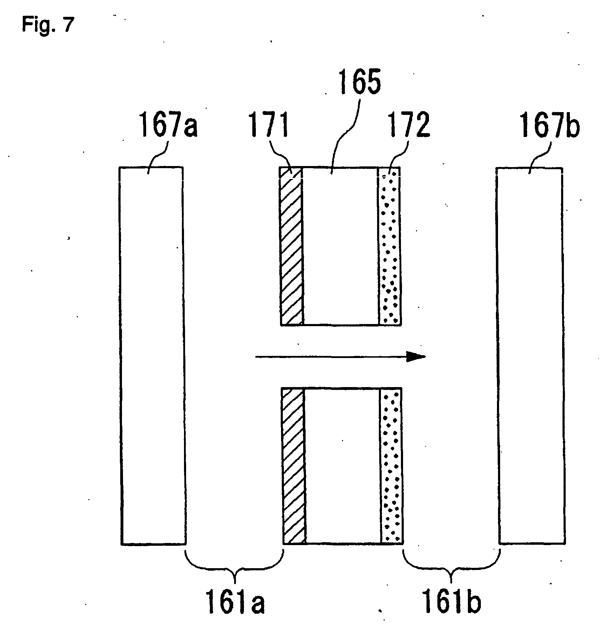

The separation flow path section of the separation device according to the present embodiment is shown in FIG.7. In this device, the sample stock solution is passed along the flow channel 161a, and the separated sample is passed along the flow channel 161b. A hydrophobic film 171 is formed on the side wall of the flow channel 161a in which the separation flow path is disposed, and a hydrophilic film 172 is formed on the side wall of the flow channel 161b in which the separation flow path is disposed. By the use of this constitution, the separation flow path has the function of the backflow prevention valve for the hydrophilic material, and the separation efficiency can further be enhanced. The hydrophilic component in the sample moves in the direction of the arrow in the figure, but it is difficult for the component to move in a direction opposite to that of the arrow. Therefore, the hydrophilic component moves into the flow channel 161b from the flow channel 161a with good efficiency, and the reaction product is remarkably enhanced.

In this device, since the pressure is used as the external force for moving the sample, a comparatively simple external force applying device may be disposed, and this is advantageous for reduction of manufacturing cost and miniaturization of the device.

In the above-described present embodiment, an example in which the straight flow paths are formed in parallel has been described, but the path is not limited to the linear path, and the flow paths having various shapes may be used.

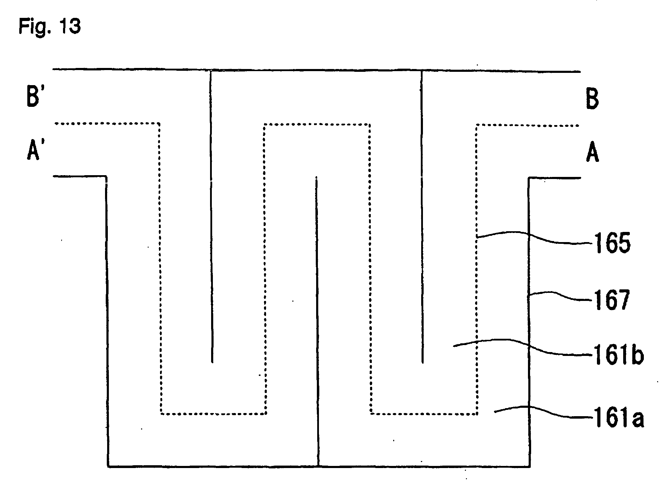

For example, the paths may also be shaped as shown in FIG.13. The sample separation section defined by a flow path wall 167 has a constitution in which the flow channels 161a and 161b are formed in parallel via the partition 165. An inlet A and outlet A' of the sample are disposed in the flow channel 161a, and an inlet B and outlet B' of the sample are disposed in the flow channel 161b.

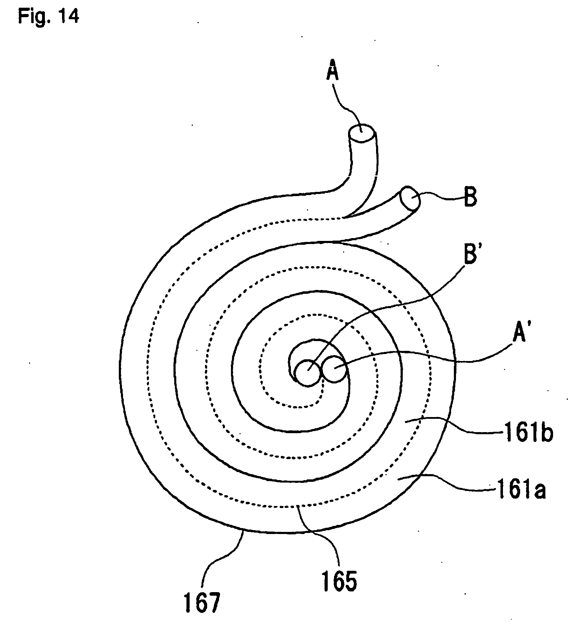

Moreover, the paths may also be formed into spiral shapes as shown in FIG.14. The sample separation section defined by the flow path wall 167 has the constitution in which the flow channels 161a and 161b are formed in parallel via the partition 165. The inlet A and outlet A' of the sample are disposed in the flow channel 161a, and the inlet B and outlet B' of the sample are disposed in the flow channel 161b.

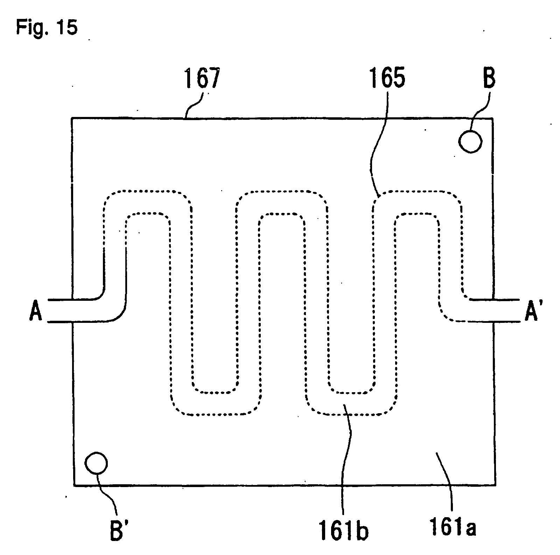

Furthermore, the paths may also be constituted as shown in FIG.15. In this constitution, the sample separation section defined by the flow path wall 167 has the constitution in which the flow channels 161a and 161b are formed via the partition 165. A region over the whole sample separation section excluding the section of the flow channel 161b constitutes the flow channel 161a. The inlet A and outlet A' of the sample are disposed in the flow channel 161b, and the inlet B and outlet B' of the sample are disposed in the flow channel 161a.

According to the above-described embodiment, the sample can easily be separated/concentrated, and further by the following embodiment, it is possible to not only separate but also detect/analyze the specific component.

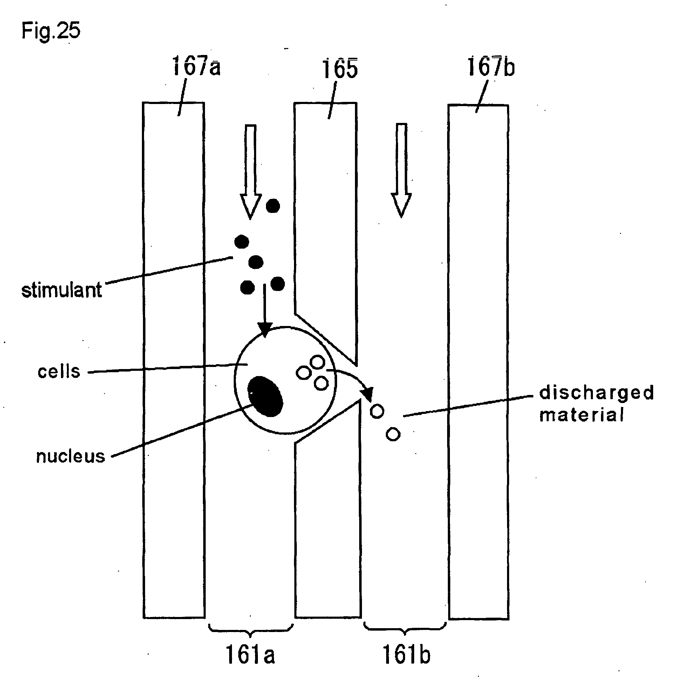

Here, the separation flow path of FIG.5 or 25 will mainly be described as an example, but the separation flow path for use in the separation, analysis, and detection of the specific component is not limited to this.

### (Ninth Embodiment)

A separation method according to the present embodiment will be described with reference to FIG.25. FIG.25 is an explanatory view of a separation and detection method of the specific component using cells. In FIG.25, the opening of the partition 165 is formed in such a size that does not allow the passage of the cells. The sample stock solution including the cells is passed along the flow channel 161a, but the cells included in the sample stock solution cannot pass through the partition 165. The flow directions (white arrows in the figure) of the flow channels 161a, 161b are the same. Here, after passing the sample stock solution, a cell stimulant material or a material which specifically reacts with the cells (stimulant factor in FIG.25) is passed along the flow channel 161a. The opening of the partition 165 is formed so as to allow the passage of the discharged material through the flow channel 161b in a case where the cells specifically discharges the material out of the cells by simulation or the like, and accordingly the discharged material can be separated and detected. By this constitution, it is possible to simply search for the material which induces, inhibits, reinforces, or eases reactions such as allergy.

It is to be noted that, in the present embodiment, the sample stock solution can flow through the flow channel 161b if necessary. The flow directions of the flow channels 161a, 161b may also be mutually opposite.

In the separation and detection using the separation device, contamination can be prevented in the separation and detection of the material discharged from the cells themselves.

Moreover, in the separation and detection using the separation device, it is possible to stimulate the cells in a specific time series pattern. In a living body, the cells react with the stimulant material having a certain concentration in a certain case, but, in more cases, the cells react with the stimulant material repeatedly given in a pulse form. When we use a culture dish on which cells are cultured for detecting the response to pulses of stimulant, the dish need to be washed away for each stimulant pulse. Moreover, this respect is improved in a method in which the cells are cultivated beforehand in bulk in a column and a culture solution and the stimulant material are passed through the column. However, as compared with the separation device of the present invention, since large amounts of reagents and cells are required, the cell culture is indispensable. In the separation and detection using the separation device, a micro amount of cells can be separated precisely, and several tens to hundreds of cells present in the opening are sufficient. Therefore, the sampled cells do not have to be cultivated.

### (Tenth Embodiment)

The separation method according to the present embodiment will be described with reference to FIG.5. In FIG.5, beads which cannot pass through the openings of the partition 165 flow through the flow channel 161a, and are accordingly usable in measurement of enzyme activity. As the beads, there can be used, for example, polymeric porous beads of agarose, cellulose, cross-linked dextran, polyacrylamide or the like, or porous glass. In the beads, a target enzyme or a color developer can be prepared by a technique such as charging or immobilization. Furthermore, the opening of the partition 165 is preferably formed into such a shape that the bead is bound in the opening. The opening of the partition 165 is formed in such a size that allows the passage of the target enzyme. In this constitution, when the sample stock solution is passed along the flow channel 161a, and when the target enzyme is contained, the bead develops color by enzyme reaction after the passage through the partition 165, and it is therefore possible to simply detect presence/absence of the target enzyme by microscopic observation of the bead. When the bead develops color, the target enzyme can be collected from the flow channel 161b side. This method can be similarly used not only in a relation of enzyme-substrate but also in another relation of ligands-receptors such as antigen-antibody and polysaccharide-lectin.

It is to be noted that, in the present embodiment, the sample stock solution may also flow through the flow channel 161b if necessary. The directions of the flow channels 161a and 161b may also be the same or mutually opposite.

### (Eleventh Embodiment)

The separation method according to the present embodiment will be described with reference to FIG.5. In FIG.5, beads for adsorption incapable of passing through the openings of the partition 165 are passed along the flow channel 161a. As the beads, there can be used, for example, polymeric porous beads of agarose, cellulose, cross-linked dextran, polyacrylamide or the like, or porous glass. Next, the sample stock solution containing a target component is passed along the flow channel 161b. Here, when the openings of the partition 165 are formed in such a size that allows the passage of the target component, part of target molecules passed through the openings of the partition 165 are adsorbed by the beads in the flow channel 161a. Next, a solution containing a primary antibody corresponding to the target component is passed along the flow channel 161a. Thereafter, a buffer solution or the like is passed along the flow channel 161a in order to clean the surplus primary antibody. Subsequently, a secondary antibody for the primary antibody is passed along the flow channel 161a. Here, if enzyme, substrate or the like is beforehand bonded to the secondary antibody, the target component can simply be detected by color development or the like. After the buffer solution has been passed along the flow channel 161a in order to clean the surplus secondary antibody, the solution containing the substrate or enzyme corresponding to the enzyme or substrate bonded to the secondary antibody is passed along the channel, whereby the target component can be detected via the color development reaction or the like. When such a constitution is established, the target component exists in a concentrated state in the beads, so that detection sensitivity is enhanced. Furthermore, if the enzyme or substrate is directly bonded to the primary antibody beforehand, the above operation becomes simpler. As a combination of enzyme and substrate which causes the color development reaction, there can be used, for example, a combination of enzyme peroxidase and 4-clioronaphtol which is its substrate, or a combination of enzyme alkali phosphatase and nitroblue tetrozolium as well as 5-bromo-4-chloro-3-indolylphosphate which are its substrates.

It is to be noted that, in the present embodiment, the sample stock solution can also be passed along the flow channel 161a, if necessary. The directions of the flow channels 161a and 161b may be the same direction or opposite directions.

### (Twelfth Embodiment)

The separation method according to the present embodiment will be described with reference to FIG.5. In FIG.5, a polymeric gel is filled or immobilized in the opening of the partition 165. At this time, the polymeric gel is formed so as to have a meshed structure in which the target molecules are trapped following a method generally for use in a molecular imprinting process.

In the molecular imprinting process, a polymeric material for recognizing the target molecule is synthesized in one stage in a tailor made manner in accordance with the target molecule, and this method is concretely performed as follows. First, the target molecule is used as a template, and a functional monomer is bonded thereto by covalent bond or noncovalent bond to form a template molecule-functional polymer complex. Here, a bifunctional or more functional monomer having a functional group capable of being bonded to the template molecule and a polymerizable group such as a vinyl group is usable as the functional monomer. Next, a crosslinking agent and polymerization initiator are added to the solution containing the template molecule-functional monomer complex to perform a polymerization reaction. Then, the template molecule is removed from the polymerized polymer. As a result, a specifically bonded site to the template molecule is formed in the obtained polymer.

The obtained polymer is filled and immobilized in the opening of the partition 165 in a chemical or physical manner. The sample stock solution containing the target molecule is passed through a separation device structured in this manner via the flow channel 161a. At this time, since the target molecule is captured by a meshed structure of the polymeric gel charged in the opening of the partition 165, a diffusion coefficient of a liquid or solute or dispersion in the polymeric gel drops. Therefore, for example, when a voltage is applied between the flow paths, conductivity of ion drops by the capture of the target molecule into the meshed structure of the polymeric gel, a current amount drops, and it is therefore possible to grasp whether or not the target material exists in the sample stock solution.

In the above-described embodiment, two or three or more flow channels may be disposed.

Moreover, in the above-described embodiment, the surface treatment or the like may also be performed appropriately in order to impart the hydrophilic property to the substrate 166 and partition 165. For example, a method may also be used in which the surface is thermally oxidized by the thermal treatment, or coated with the coupling agent including the hydrophilic group. In this case, when the component to be collected is the biological component such as proteins, the effect of preventing the denaturalization of the component is fulfilled, further non-peculiar adsorption of the component into the flow path of the device can be inhibited, and therefore the separation and detection sensitivity can be enhanced.

In the above-described embodiment, an opening of the separation flow path disposed in the partition is enlarged on one flow channel side as compared with the opening of the other flow channel side, but the shape of the separation flow path is not limited to this.

In the constitution of the opening of the separation flow path enlarged on one flow channel side as compared with the opening of the other flow channel side, the particles which bond or react to the specific component in the sample stock solution can be preferably effectively immobilized to the separation flow path section. Furthermore, by this constitution, since the function of the backflow prevention valve for the component is imparted to the separation flow path, the constitution is more preferable in operations such as separation, detection, and concentration.

Moreover, in the above-described embodiment, the preparation of the beads or antibody, detection reaction by enzyme and the like may be performed by a method for use in affinity chromatography, ELISA process or the like.

### (Thirteenth Embodiment)

In the above-described embodiment, the device including the partition in which the separation flow paths are regularly formed has been described. In the present embodiment, one example of a separation device different from these devices will be described.

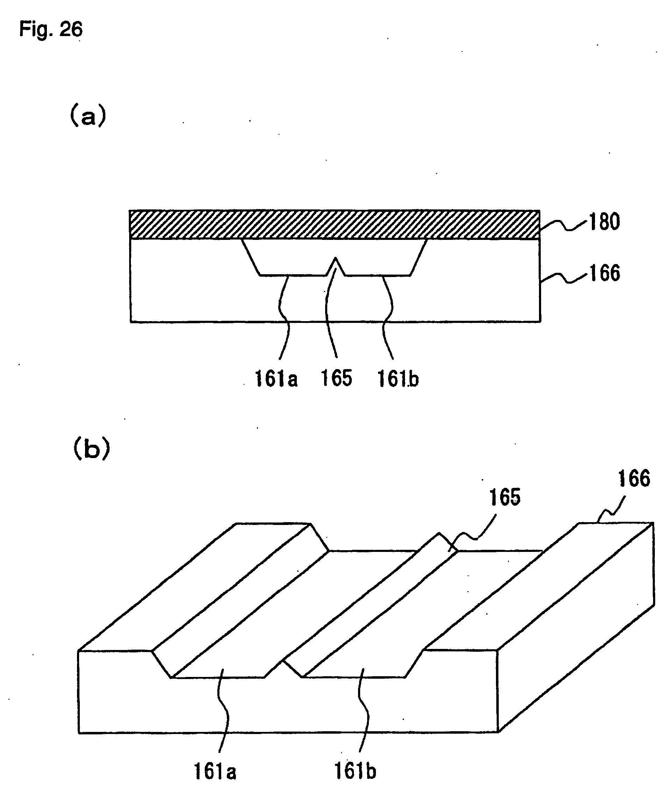

FIG.26 is a diagram showing the separation device of the present embodiment, and divided figures (a), (b) are a sectional view and perspective view, respectively. As shown in FIG.26(a), two flow channels 161a, b are disposed in the substrate 166, and the partition 165 is disposed so as to divide the channels. The cover 180 is disposed on the substrate 166. For the convenience, the cover 180 is not shown in FIG.26(b). It is to be noted that the partition 165 corresponds to the above-described bank portion.

As seen from FIG.26(a), since a space is secured between the partition 165 and the cover 180, the flow channels 161a and 161b communicate with each other via the space. This space corresponds to the separation flow path disposed in the partition in the above-described separation device. Therefore, for example, the sample containing the material to be separated is passed along the flow channel 161a, and the buffer solution is passed along the flow channel 161b so that the separation operation can be executed. It is to be noted that, in this case, the cover 180 made of a hydrophobic material such as polydimethyl siloxane or a polycarbonate is preferably selected. In this case, the sample or the buffer solution can be introduced into the respective flow channel without invasion of the sample or the buffer solution to another flow channel, and the sample and buffer solution are mixed in both the flow channels via the space in a stage in which both the flow channels are filled with the sample and the like. This effect can also be obtained by the operation in a state in which the cover 180 is not attached. At this time, air itself functions as the hydrophobic material in the same manner as in the cover 180.

Moreover, as another separation method using the separation device of the present embodiment, the following method is used. For example, the sample is passed along the flow channel 161a in a state in which the cover 180 made of a hydrophilic material such as polyethylene terephthalate is attached to the separation device of the present embodiment. In this manner, the sample enters the other flow channel 161b. During the entering, the separation is realized, because the only component having a size smaller than that of the space formed between the cover 180 and the partition 165 is strained off.

Since in the separation device of the present embodiment, the flow channels 161a and 161b are connected to broad areas as compared with the above-described separation device, there is an advantage that the separation efficiency is enhanced. Moreover, the channels are not easily clogged even with the thin material, the material is easily movable between the flow paths, and therefore the device is preferably usable in the separation of the sample containing such material.

The flow channels 161a, b and the partition 165 are obtained, for example, by the wet etching treatment of a (100) Si substrate. When the (100) Si substrate is used, the etching proceeds in a trapezoidal form as shown in direction crossing a (001) direction at right angles or parallel to the direction. Therefore, it is possible to adjust the height of the partition 165 by the adjustment of the etching time.

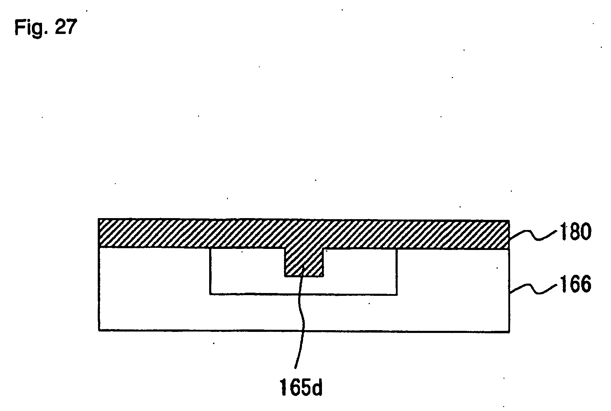

Moreover, as shown in FIG.27, a partition 165d may also be disposed on the cover 180. The cover 180 including the partition 165d can be easily obtained by injection molding of a resin such as polystyrene. One flow path may only be disposed in the substrate 166 by the etching or the like. Therefore, the separation device is obtained by the above-described simple process, and is therefore suitable for mass production.

### (Fourteenth Embodiment)

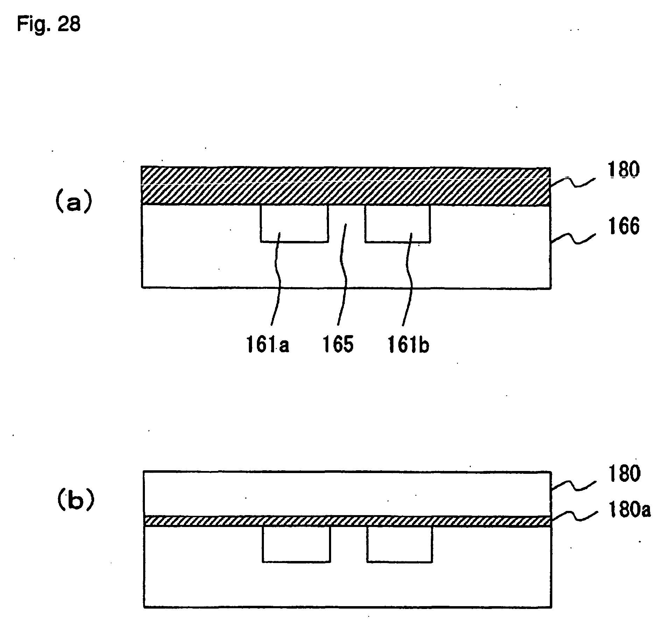

The sectional view of the separation device according to the present embodiment is shown in FIG.28. The separation device of FIG.28(a) includes the substrate 166 including the flow channels 161a, 161b and partition 165 and the cover 180. The substrate 166 is similar to the substrate described in the first embodiment, but the present embodiment is characterized in the use of the hydrophobic material in the cover 180.

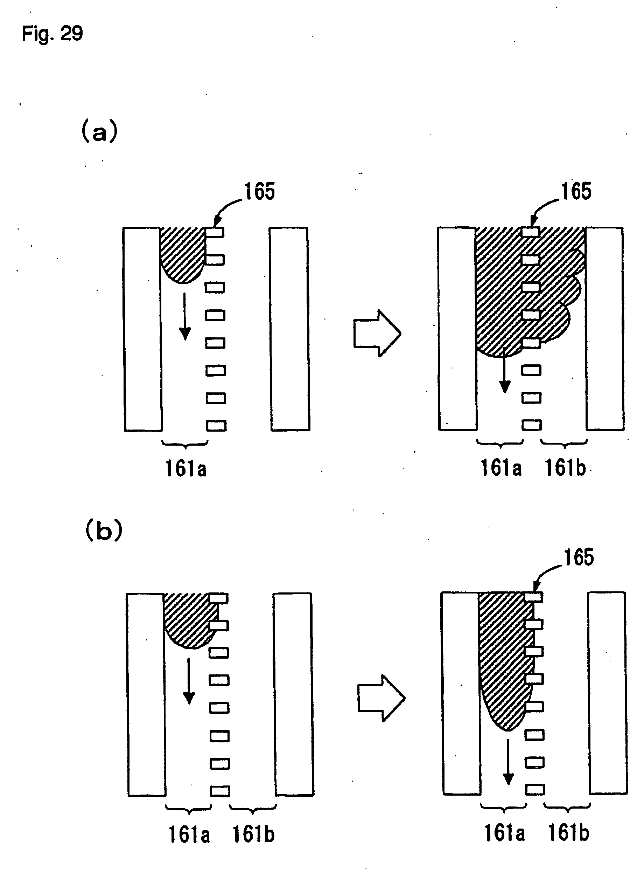

With the use of the cover made of the hydrophilic material, when the sample is introduced into one flow channel 161a as shown in FIG.29(a), the sample also quickly enters the flow path of the other flow channel 161b via a large number of openings disposed in the partition 165. To realize the separation, the buffer solution or the like needs to be passed along the flow channel 161b before this state, and therefore the sample and buffer solution or the like have to be simultaneously introduced, but it is usually difficult to perform this operation.

On the other hand, the present inventors have found that the following phenomenon occurs in the separation device of the present embodiment using the cover 180 made of the hydrophobic material. That is, in FIG.29(b), when the sample is introduced into one flow channel 161a, the sample remains in the flow channel 161a without invasion of the sample to the other flow channel 161b. It has further been clarified that when the buffer solution and the like flow through the other flow channel 161b in this state, the solutions in two flow channels 161a and 161b are mixed via the openings disposed in the partition 165.

According to the separation device of the present embodiment including the above-described property, the difficult operation of simultaneously introducing the sample, buffer solution and the like is unnecessary, and the separation can securely be executed.

Examples of the material of the cover 180 of the separation device of the present embodiment include hydrophobic resins such as polydimethyl siloxane (PDMS), polycarbonate, and polystyrene. In addition to the cover 180 using the hydrophobic material, for example, as shown in FIG.28(b), there can also be employed a cover in which a hydrophobic coating layer 180a including a hydrophobic coating agent such as xylene silazane is formed on the surface of the cover 180.

Here, to realize the mixing of the solutions via the above-described openings, a degree of hydrophobicity of the cover 180 needs to be selected in accordance with the diameter of the opening. For example, when the diameter of the opening is 50 µm or more and comparatively large, the above-described mixing occurs even with the use of the cover 180 made of PDMS that is the material having a remarkably high degree of hydrophobicity. However, when the opening has a diameter of 1µm or less and is small, the above-described mixing does not occur with the use of the cover 180 made of PDMS. In this case, it is possible to cause the above-described mixing by the selection of polycarbonate, as the material of the cover 180, having hydrophobicity lower than that of PDMS.

Furthermore, when the separation device having the above-described properties is used, for example, isozyme analysis can also be performed. Isozyme refers to an enzyme group having different origins but having an equal enzyme acitivity. For example, it is known that there are five types of isozyme (LDH 1 to 5) in lactic dehydrogenase (LDH), and distributions have characteristics in accordance with organization/internal organ. Therefore, when a rise of any isozyme is checked, it is possible to presume a diseased tissue. This analysis is referred to as the isozyme analysis.

Usually, in the isozyme analysis, each isozyme is separated on the gel by electrophoresis, thereafter the color of a band is developed by immersion of the isozyme together with gel in the color developer, and the degree of the activity of each isozyme is checked to perform the analysis.

To realize this isozyme analysis on a micro flow path having a width of about 100 µm, it is necessary to disposed the separation region in the micro flow path and to separate each isozyme in the separation region and to thereafter incorporate a dyeing solution into the separation region. However, during the introduction of the dyeing solution into the micro flow path, the micro flow path is filled with an analysis object sample. Therefore, any capillary phenomenon occurs, and it is difficult to incorporate the dyeing solution into the whole micro flow path.

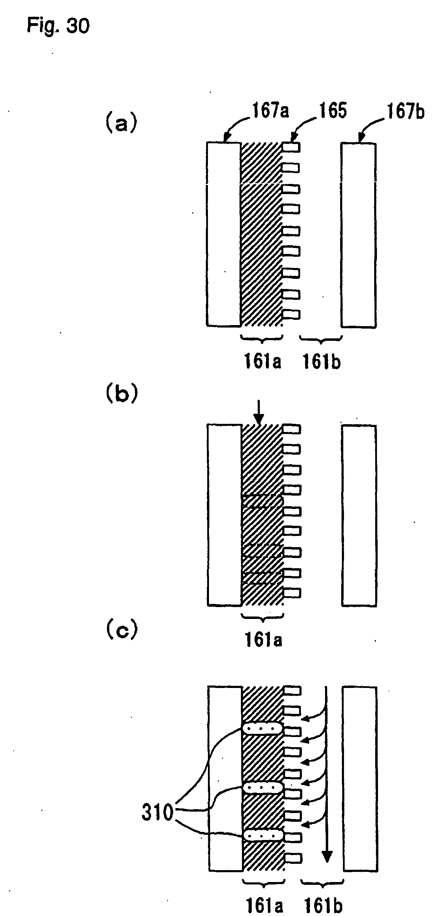

When the device of the present embodiment is used, it is possible to perform the isozyme analysis on the micro flow path. A procedure of analysis will be described hereinafter with reference to FIG.30. FIG.30(a) is a diagram showing the structure of the flow path section of the separation device for use in the anaiysis. This device includes two flow channels 161a and 161b between walls 167a and 167b of the flow path, and both the channels are partitioned by the partition 165 including the openings. The separation region shown by slant lines in the figure is disposed in the flow channel 161a. When the analysis object sample is introduced into the flow channel 161a of the device from an arrow direction of FIG.30(b), each isozyme contained in the sample is separated, and the band is formed as shown by a dotted line. It is to be noted that the band cannot be confirmed at this time. Next, when the color developer for developing the color of the band is introduced into the flow channel 161b, the color developer moves as shown by arrows in FIG.30(c) by the capillary phenomenon, and gradually enters the flow channel 161a. The color developer which has entered the channel reacts with each isozyme to develop color, but each isozyme exists forming the band in the flow channel 161a, and the color is developed as bands 310, and it is possible to visually recognize this. When positions of the bands of the respective isozymes are identified beforehand, intensity of the developed color of each band is observed, and it is therefore to instantaneously judge a high isozyme activity.

The separation region to be disposed in the flow channel 161a can be prepared by the introduction, for example, of polyacrylamide gel or agarose gel into the flow channel 161a. In this case, since the hydrophobic cover is disposed as described above, the gel introduced into the flow channel 161a does not leak into the flow channel 161b.

Moreover, for example, a large number of micro obstructions such as columnar bodies of the nano order may also be disposed as the separation region disposed in the flow channel 161a. The surfaces of the micro obstructions may also be hydrophilic. Since a water retaining effect is accordingly obtained, the sample can be inhibited from flowing out of the flow channel 161b.

To perform the isozyme analysis of LDH, for example, the color developer containing lactic acid which is the substrate of LDH, nitrotetrasolium blue is usable. The enzyme reaction proceeds in a place where LDH exists, a reducing substance generated during this reaction reduces nitrotetrasolium blue to develop a blue purple color.

Furthermore, the color development is directly observed in an enlarged size by a lens, and the band having the largest intensity of the color development can be judged. A pattern of the color development is digitized by a scanner so that a shading pattern can also be obtained. When this pattern is evaluated, it is possible to obtain information useful for diagnosis.

### (Fifteenth Embodiment)

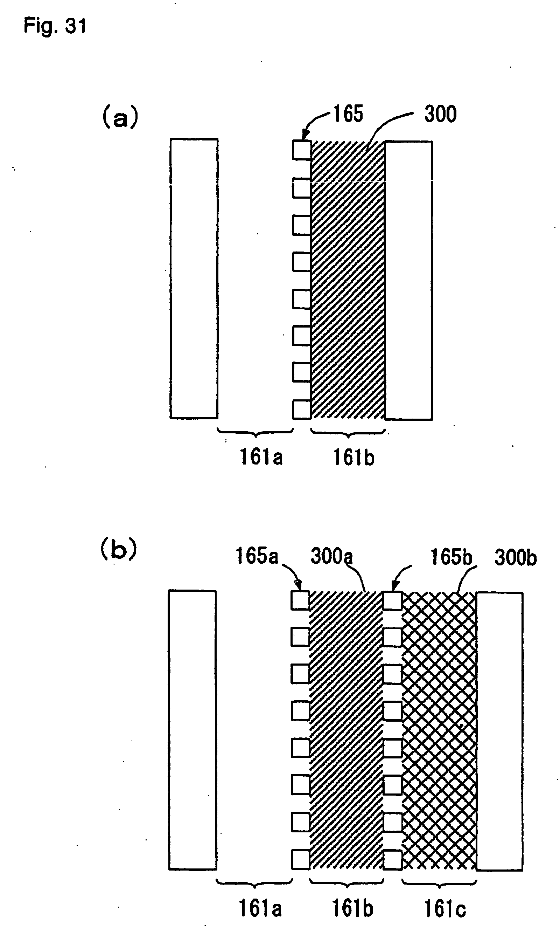

The structure of the separation flow path section of the separation device according to the present embodiment is shown in FIG.31(a). The separation device according to the present embodiment has a structure similar to that of the separation device described in the first embodiment. That is, two flow channels 161a and 161b are disposed via the partition 165 including the openings. A water absorption material 300 is disposed in the flow channel 161b in the two flow channels.

The sample is introduced into the flow channel 161a. At the same time when the sample advances in the flow channel 161a, water contained in the sample passes through the openings of the partition 165 to move into the flow channel 161b, and is absorbed by the water absorption material 300 disposed in the flow channel 161b. As a result, a content of water in the introduced sample decreases. That is, it is possible to realize the concentration of the sample according to the separation device of the present embodiment.

Examples of the material of the water absorption material 300 include water absorbing polymers such as methyl cellulose and acetyl cellulose. The water absorption material 300 can be introduced into the flow channel 161b, for example, as follows. The water absorbing polymer is brought into a state of aqueous gel, and injected into the flow channel 161b in a state in which any cover is not attached. In this manner, the gel remains in the flow channel 161b without leaking into the flow channel 161a. After the gel is dried in this state, the cover is attached to the separation device, and accordingly the separation device of the present embodiment is obtained.

Moreover, as shown in FIG.31(b), three flow channels 161a, 161b, 161c are disposed, and the flow channels 161b and 161c may be provided with water absorption materials 300a, 300b. In this figure, when an water absorbing power of the water absorption material 300a is set to be smaller than that of the water absorption material 300b, the water content is introduced into the flow channel 161c, and therefore it is possible to more securely concentrate the sample.

The water absorption materials 300a and 300b can be disposed by the injection of the gel of the water absorbing polymer into the flow channel as described above. In this case, when a water absorbing polymer concentration in the gel which is passed along the flow channel 161b is set to be lower than that in the gel which is passed along the flow channel 161c, the water absorbing power of the water absorption material 300a can be set to be smaller than that of the water absorption material 300b.

### (Sixteenth Embodiment)

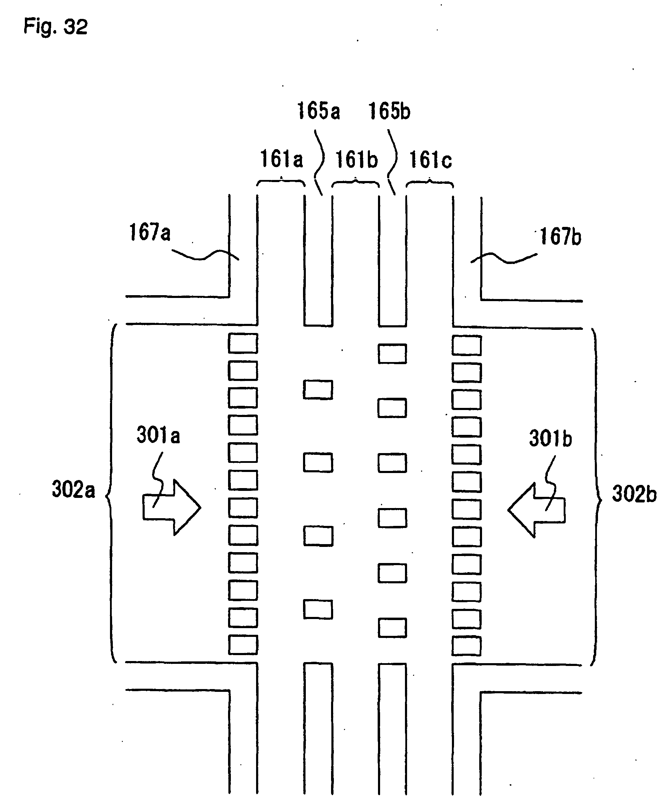

The structure of the separation flow path section of the separation device according to the present embodiment is shown in FIG.32. This separation device includes three flow channels 161a, 161b, 161c between the flow path walls 167a and 167b. Partitions 165a, 165b including the openings are disposed between the flow channels 161a and 161b and between the flow channels 161b and 161c, respectively. The opening of 165a is disposed to be larger than that of 165b. Micro openings are also disposed in the walls 167a and 167b of the flow path for reasons described later. Places where the openings of the walls 167a and 167b of the flow path are disposed are connected to flow paths for pressurization 302a and 302b.

Next, the separation of the sample using the separation device of the present embodiment will be described. The sample which is the separation object is introduced into the flow channel 161b. The buffer solution is passed along the flow channels 161a and 161b. When the portions including the openings of the flow channels 161a, 161b, 161c are filled with the sample or the buffer solution, the buffer solution is also introduced into the flow paths for pressurization 302a and 302b, and pressures 301a and 301b are alternately applied. Since the micro openings are disposed in the flow path walls 167a and 167b of the flow path as described above, the pressures 301a and 301b are conducted to the flow channels 161a to 161c.

In the figure, since the opening of 165a is disposed to be larger than that of 165b, small molecules 151 are collected into the flow channel 161c, and the small molecules 151 and approximately medium sized molecule 153 are collected in the flow channel 161a. In the flow channel 161b, the large molecules 152 incapable of moving into another flow channel are obtained with high concentration. The above-described separation is realized to a certain degree by natural diffusion, even when the pressures 301a and 301b are not applied. However, when the pressures 301a and 301b are applied, forces vertical to the traveling direction are applied to the molecules included in the sample, and therefore a chance that the molecule moves into the other flow channel remarkably increases. Therefore, the separation efficiency is enhanced.

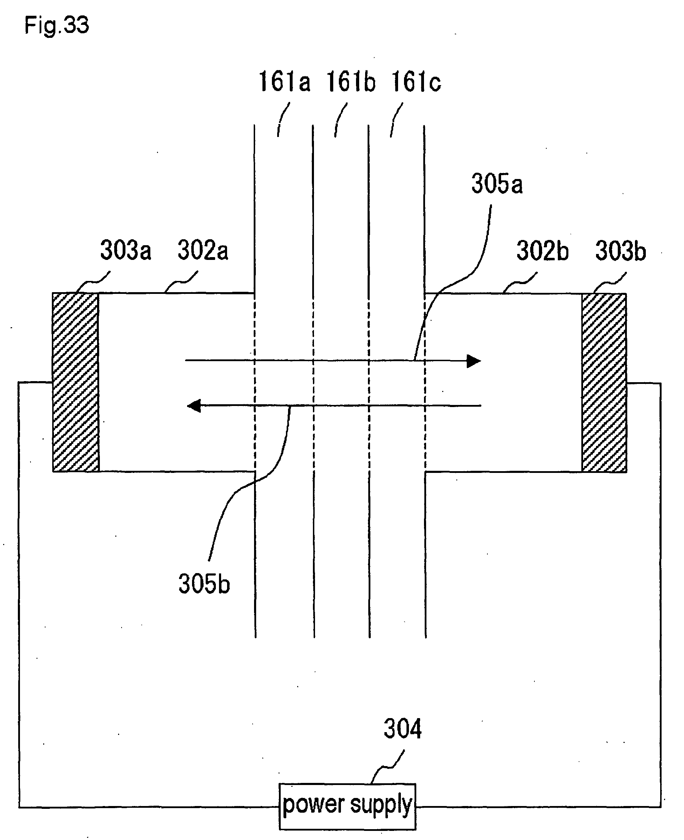

The pressures 301a and 301b_can be applied, for example, by a pump. In addition to the pump, a constitution shown in FIG.33 may also be used. Electrodes 303a and 303b are disposed in the flow paths for pressurization 302a and 302b, and currents flow through the electrodes 303a and 303b via a power supply 304. Accordingly, electroosmosis currents 305a and 305b can be generated. The electroosmosis currents are generated in the following principle. When the flow path wall surface is silicon oxide, an isoelectric point of silicon oxide is in a range of pH 2 to 3, and the flow path wall surface is charged to be minus at a higher pH. Therefore, plus valency ions included in the buffer solution gather on the flow path wall surface. When an electric field is applied in this state, a flow occurs toward a minus electrode side in the vicinity of the flow path wall surface by these plus valency ions, and therefore a flow toward a plus electrode side is generated in a flow path middle part to compensate for the flow. This series of flow is the electroosmosis current. Therefore, when the direction of the current of the power supply 304 is periodically changed, the electroosmosis currents 305a and 305b can be alternately produced.

### (Seventeenth Embodiment)

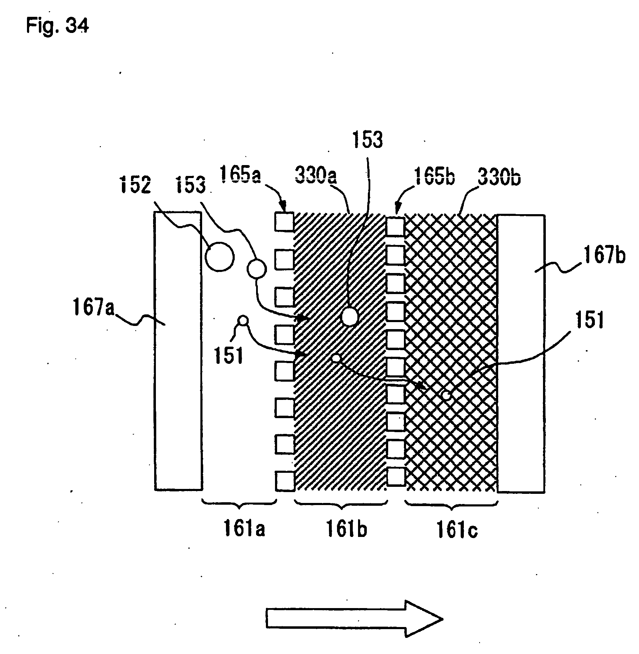

The structure of the separation flow path section of the separation device according to the present embodiment is shown in FIG.34. The separation device includes three flow channels 161a, 161b, 161c between the walls 167a and 167b of the flow path. The partitions 165a, 165b including the openings are disposed between the flow channels 161a and 161b and between the flow channels 161b and 161c, respectively. The opening of 165a is disposed to be larger than that of 165b.

Next, the separation of the sample using the separation device of the present embodiment will be described. The sample which is the separation object is introduced into the flow channel 161a. A first buffer solution 330a having an osmotic pressure higher than that of the sample is passed along the flow channel 161b, and a second buffer solution 330b further having an osmotic pressure higher than that of the first buffer solution 330a is passed along the flow channel 161c. In this manner, since the osmotic pressure is produced in a white arrow direction in the figure, that is, a direction vertical to the partitions 165a and 165b, the flow of water can be generated in the same direction without using any pump. Therefore, since the molecules sized so as to be capable of passing through the partitions 165a, 165b can be securely passed, it is possible to remarkably enhance the efficiency in separation. For example, as shown in the figure, it is assumed that a sample including the large molecule 152, small molecule 151, and approximately medium sized molecule 153 is passed. The sizes of the openings of the partitions 165a, b are set in such a manner that the only small molecule 151 and approximately medium sized molecule 153 are capable of passing through the partition 165a and that the only small molecule 151 is capable of passing through the partition 165b, and accordingly the small molecule 151 and approximately medium sized molecule 153 are securely movable in the flow channels 161c and 161b.

For the first and second buffer solutions 330a and 330b, a salt concentration of the latter is set to be higher than that of the former, the above-described osmotic pressure can be generated. Alternatively, when the first and second buffer solutions 330a and 330b are set to have the equal salt concentration, a saccharide such as mannose, a linear acrylamide polymer and dilute agarose colloid are added, and the concentrations of these substance of the second buffer solution 330b are set to be higher than those of the first buffer solution 330a, the above-described osmotic pressures can be generated.

### (Eighteenth Embodiment)

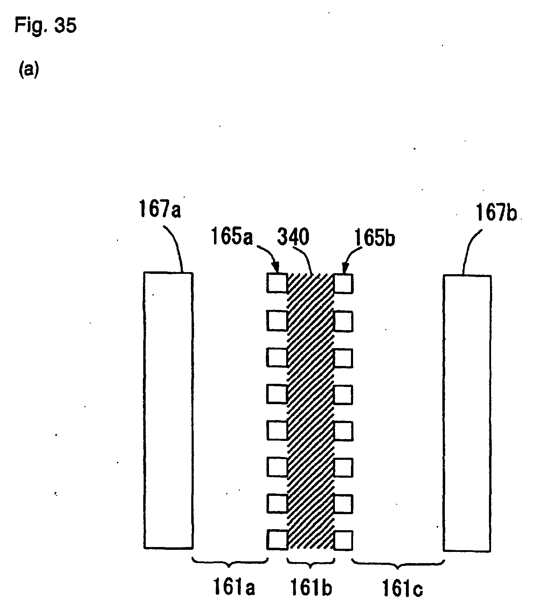

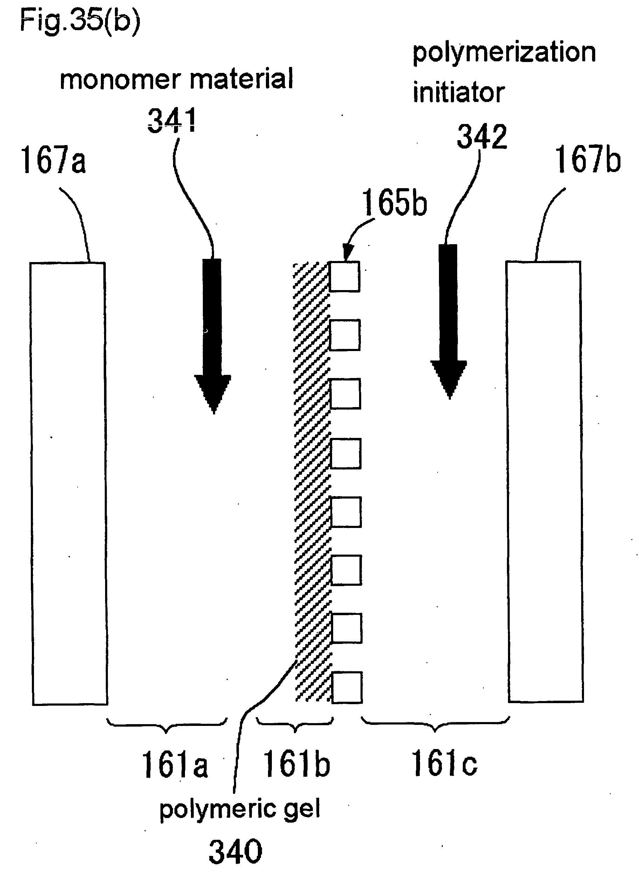

The structure of the separation flow path section of the separation device according to the present embodiment is shown in FIG.35(a). The separation device includes three flow channels 161a, 161b, 161c between the walls 167a and 167b of the flow path. The partitions 165a, 165b including the openings are disposed between the flow channels 161a and 161b and between the flow channels 161b and 161c, respectively. Here, the flow channel 161b is narrower than the other flow channels for reasons described later, and has a width, for example, of about 1 to 10 µm. Furthermore, a polymeric gel film 340 is disposed in the flow channel 161b. The polymeric gel film 340 includes a large number of holes each having a size of 1 nm.

It is difficult to dispose the holes with the size of 1 nm in the present nano-processing technique. To solve the problem, in the separation device of the present embodiment, the holes are used as the separation flow paths which communicate with the flow channels 161a and 161b.

Next, the separation of the sample using the separation device of the present embodiment will be described. The sample which is the separation object is introduced into the flow channel 161a. The buffer solution is passed along the flow channel 161c. Since the only substance having a size of 1 nm or less in the sample is capable of passing through the polymeric gel film 340, it is possible to separate the substance having the size of 1 nm or less from the sample.

The polymeric gel film 340 can be prepared as follows. The polymeric sol having a predetermined concentration is passed along the flow channel 161b. At this time, the flow channel 161b is not covered with the cover. In this manner, the polymeric sol stays in the flow channel 161b without overflowing from the flow channel 161a or 161c. The polymeric sol is left to stand in this manner, and is accordingly gelated to form the polymeric gel film 340. Examples of the polymeric gel include polyacrylamide, methyl cellulose and agarose.

It is also possible to separate proteins, for example, having a remarkably small size of 1 nm by the separation device of the present embodiment. It is also possible to separate not only proteins but also ions and the like. Therefore, the separation device of the present embodiment may also be used for a desalting purpose.

The polymeric gel film may also be prepared as follows (see FIG.35(b)). Unlike FIG.35(a), even when one partition is disposed, a low molecular material 341 is passed and charged as a raw material of polymer into one flow path, and a polymerization agent 342 is then passed along the other flow path to start the polymerization, and accordingly the polymeric gel film 340 is formed along the partition. After the polymeric gel film is formed, the polymeric gel film itself obstructs permeation of the low molecular material and polymerization agent, and therefore the film is maintained to be thin. After the polymeric gel film is formed, the flow paths on the opposite sides are cleaned to remove the low molecular material and polymerization agent, and accordingly the partition suitable for filtration of small molecules can be realized.

When polyacrylamide is used as the polymeric gel, acrylamide containing NN'-methylenebisacrylamide is usable as the low molecular material (acrylamide is dissolved in distilled water at a ratio of 39 g to 1 g of bis-acrylamide to prepare the material so that weight % of the whole solute is about 2.5%), and persulfate ammonium is usable as the polymerization agent (prepared in about 5 to 20 wt%).

It is to be noted that as the porous body other than the polymeric gel film 340, a porous film obtained by sintering aqueous solution of sodium silicate (water glass), or a porous film obtained by sintering colloidal particle such as aluminum hydroxide sol and iron hydroxide colloidal sol may also be used.

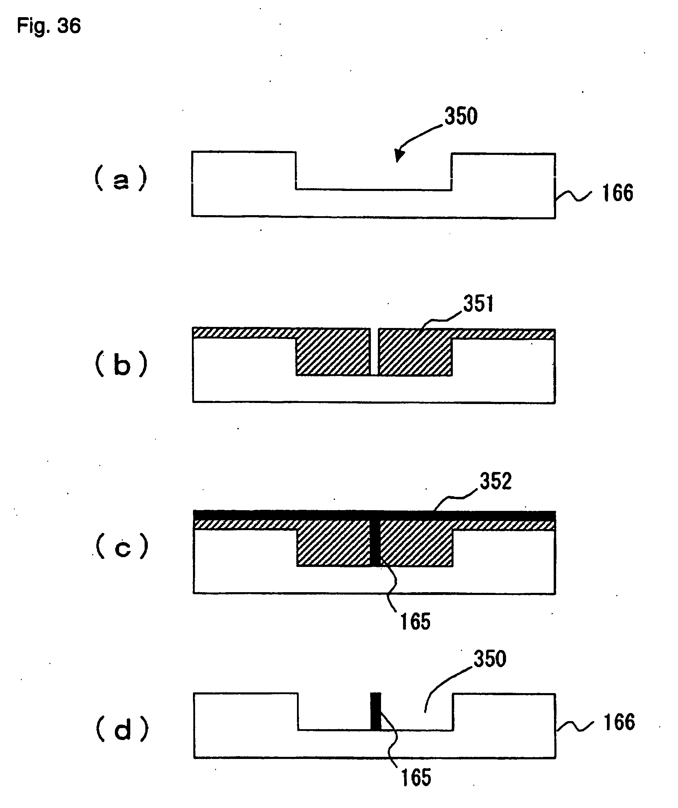

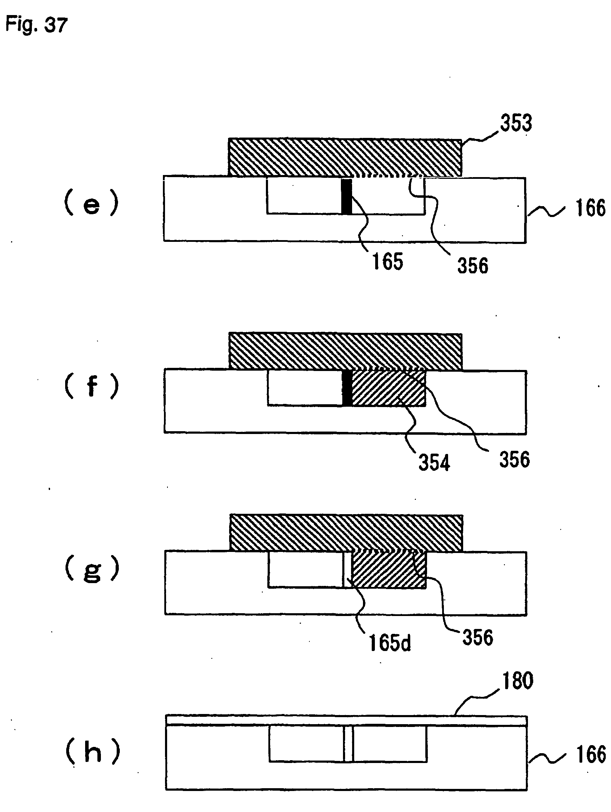

Furthermore, it is also possible to dispose the partition including the holes of the nano-order in the following method. This will be described with reference to figures 36 and 37. First, as shown in FIG.36(a), a flow path 350 is formed in the insulating substrate 166 of glass, quartz or the like. Next, as shown in FIG.36(b), after forming a photoresist pattern 351 opened only in the vicinity of the middle of the flow path 350, as shown in FIG.36(c), the partition 165 and an aluminum layer 352 each having a thickness of several µm are formed by film formation of aluminum by a sputtering process, or vapor deposition. Furthermore, the aluminum layer 352 is shaved by a damascene process, subsequently the photoresist pattern 351 is removed, and accordingly the substrate 166 including the partition 165 made of aluminum is obtained in the flow path 350 as shown in FIG.36(d). The height of the partition 165 is set to be equal to the depth of the flow path 350.

Subsequently, as shown in FIG.37(e), an electrode 353 is brought into contact with the partition 165, and the electrode 353 is pressed onto the substrate 166 along the flow direction of the flow path 350. It is to be noted that a portion of the undersurface of the electrode 353 facing the flow path 350 on one side constitutes an insulating layer 356. FIG.37(e) shows a case where the oxide film is disposed, and the constitution may also be insulated by air without specially forming any layer.

Next, as shown in FIG.37(f), an electrolyte solution 354 such as sulfuric acid is introduced into the flow path on one side on which the insulating layer 356 is formed, and an electrode is disposed in a flow path end so as to be immersed in the electrolyte solution. When the oxide film is formed as the insulating layer 356 as shown, the flow path 350 may be completely filled with the electrolyte solution 354. However, in the constitution in which any layer is not especially formed, the flow path 350 is not completely filled with the electrolyte solution 354, and a layer of air is formed between the solution and the undersurface of the electrode 353. In this case, the layer of air constitutes the insulating layer 356. The electrode 353 is used as a plus pole, and the electrode disposed on the flow path end is used as a minus pole to apply a voltage so that anodization is performed. The oxidation is performed until the current stops. As a result, as shown in FIG.37(g), a partition 165d made of aluminum oxide is obtained. Moreover, hydrochloric acid is introduced into another flow path to dissolve/remove ammonium which has been left without being oxidized. Thereafter, as shown in FIG.37(h), the cover 180 is attached to the substrate 166 to obtain the separation device.

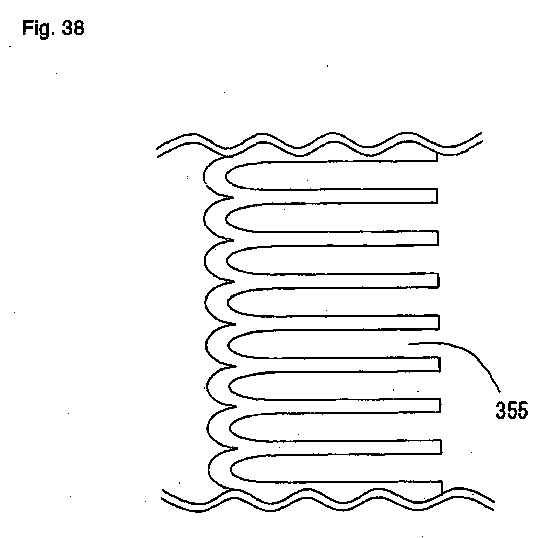

An enlarged view of the partition 165d made of aluminum oxide in FIG.37(g) is shown in FIG.38. As shown, the partition is an aluminum oxide film in which test-tubular concave portions 355 are regularly formed. Since the aluminum oxide film has a lattice having a gap of the order of 0.1 nm, the only ions can be passed.

Moreover, in the above, as shown in FIG.37(f), the anodization has been performed in a state in which the electrolyte solution 354 is introduced only into one flow path. However, when the electrolyte solution is introduced into both the flow paths and the anodization is performed, through holes can be formed in the partition. Since the through hole obtained in this manner has a size of 1 to 4 nm, the separation device including this partition is preferably usable for the purpose of the separation of proteins.

### (Nineteenth Embodiment)

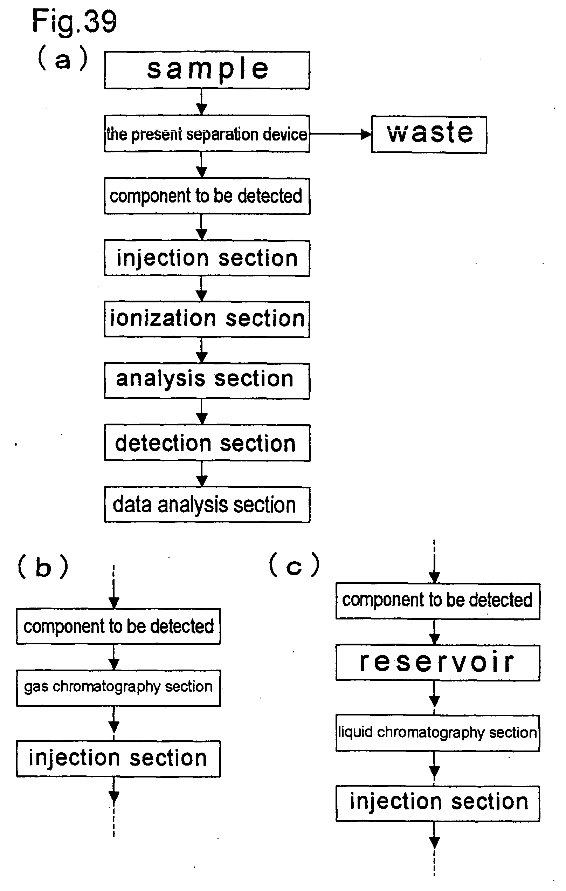

The constitution of the analysis system according to the present embodiment is shown in FIG.39. FIG.39(a) is a diagram showing a basic constitution of a mass analysis system (MS analysis device) of the present embodiment. The analysis system of the present embodiment is constituted, for example, by a separation device including an injection section, ionization section, detection section, and analytical section and incorporating any of the separation devices of the above-described embodiments. The sample which is the analysis object is introduced into the separation device and is separated into a component to be detected and an unnecessary component. The component to be detected is introduced into the injection section of the separation device, fed into the ionization section, and ionized. The ionized component to be detected is successively analyzed/detected by the analysis and detection sections as shown. Data obtained in this manner is analyzed by the analytical section, and the analyzed device is output.

Moreover, when a partial constitution including the component to be detected and injection section in FIG.39(a) is replaced as shown in FIG.s 39(b) and (c), a GC-MS analysis device and an LC-MS analysis device can be constituted. In FIG.39(c), a reservoir is disposed for the purpose of supplying a comparatively large amount of components to be detected to the LC device, but does not have to be necessarily disposed. In FIG.39(b), any reservoir is not disposed, but the reservoir may also be disposed before a GC section.

The sample is not especially limited, but examples thereof include blood, tissue extract and the like.

### (Twentieth Embodiment)

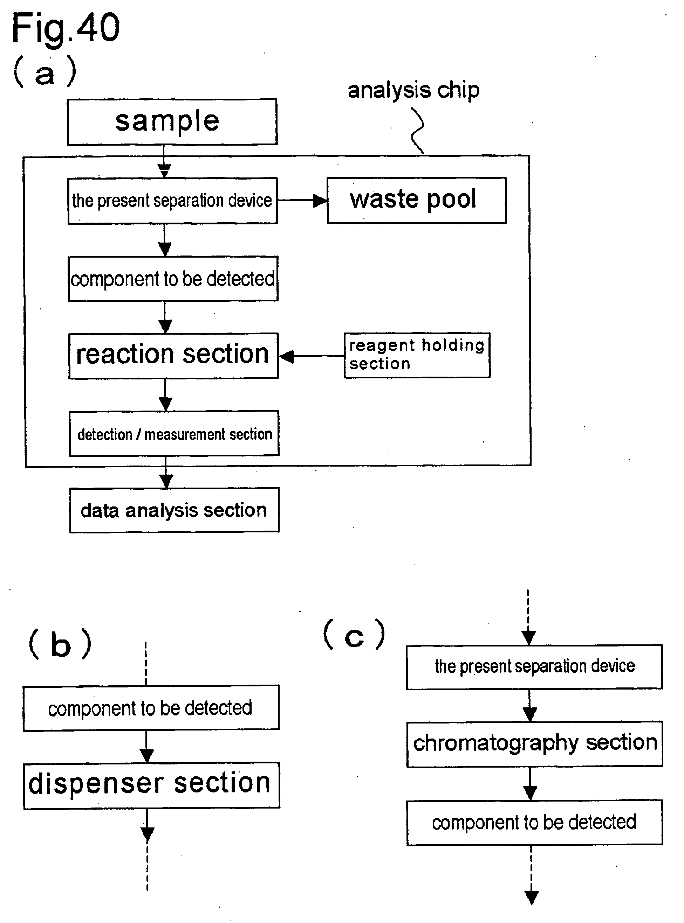

The constitution of the analysis system according to the present embodiment is shown in FIG.40. FIG.40(a) is a diagram showing a basic constitution of a clinical inspection system of the present embodiment. For the clinical inspection system of the present embodiment, for example, an analysis chip including, for example, any of the separation devices of the above-described embodiments, reaction section, and detection/measurement section is fitted into a device for exclusive use including the analytical section, and used. The sample which is the analysis object is introduced into the separation device and is separated into the component to be detected and the unnecessary component. The component to be detected is fed into the reaction section, and mixed with a reagent supplied from a reagent holding section. A reaction result in the reaction section is detected/measured by the detection/measurement section. The data obtained in this manner is analyzed by the analytical section, and the result is output.

Here, when the reaction in the reaction section is, for example, a color development reaction or a light emitting reaction, and the detection/measurement can be visually performed, the detection/measurement section may be omitted. The detection/measurement section does not have to be necessarily disposed in the analysis chip, and the chip may also be disposed in the device for exclusive use, for example, together with the analytical section. The reagent holding section and an unnecessary component storage do not have to be necessarily disposed in the analysis chip, and may also be disposed outside, for example, via a tube or the like.

Moreover, to simultaneously analyze a plurality of measurement items, as shown in FIG.40(b), a dispenser section may also be disposed.

Furthermore, as shown in FIG.40(c), a chromatography section for further separating a plurality of components to be detected separated by the separation device may also be disposed. It is possible to execute, for example, the above-described isozyme analysis by this clinical inspection system.

### [Example 1]

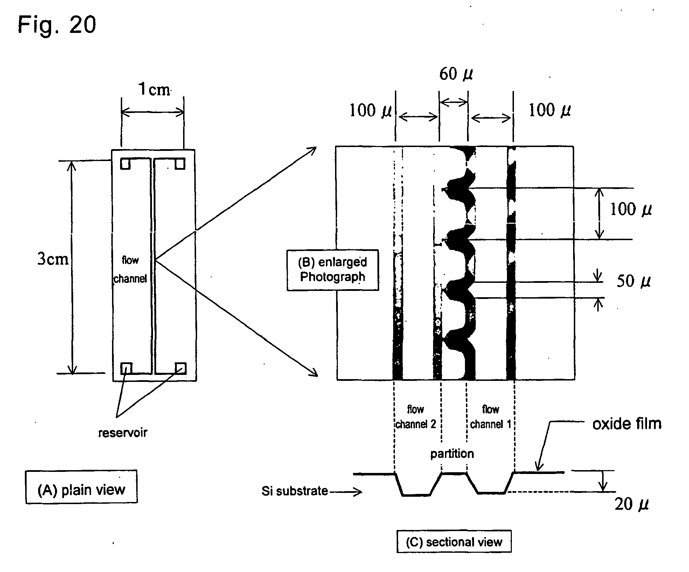

A separation device shown in FIG.20 was prepared to separate blood components.

In the present example, the (110) Si substrate was used as the Si substrate. The (110) Si substrate was subjected to photolithography and anisotropic etching using tetramethyl ammonium hydroxide (TMAH). The etching was performed twice using 25% TMAH, and conditions were set at 90°C for 20 minutes for the first etching, and 60°C for 20 minutes for the second etching.

It is to be noted that in the method used this time, a second etching time can be increased/decreased to control the size of the opening in a range of several µm to several tens µm.

After the etching, a thin oxide film was formed on the silicon surface by a concentrated nitric acid treatment at 90°C for 20 minutes. Accordingly, the silicon substrate surface had the hydrophilic property, and the water was capable of flowing in. To inhibit non-peculiar adsorption of the components in blood, the substrate surface was coated with a 100 times diluted solution of Lipidure (manufactured by NOF Corp., registered trademark) and was thereafter dried with an air gun.

The structure of the obtained separation device is shown in FIG.20. The separation device ha a size of about 3 cm × 1 cm. The device includes two flow paths (flow paths 1 and 2) having a width 100 µm × depth 20 µm and extending in parallel with each other, and a partition for partitioning the flow paths. The partition is provided with the separation flow paths by rotor-shaped cutouts from a flow path 1 side, and communicates with the flow path 2 via tips of the paths.

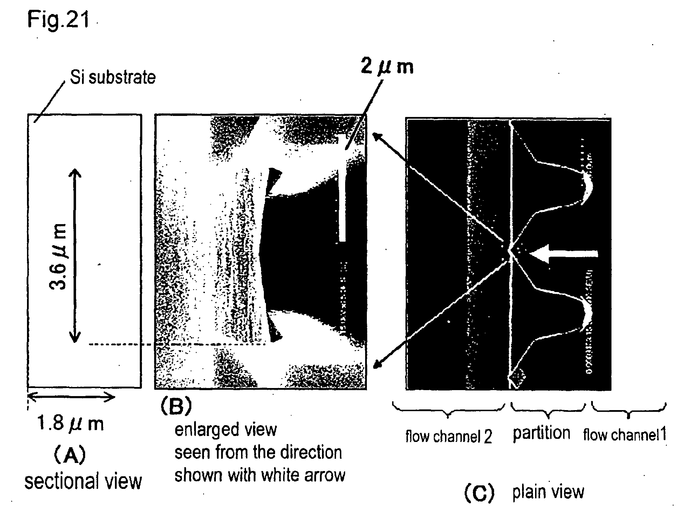

Moreover, FIG.21 is a scanning type electronic microscope (SEM) photograph of the partition. When the plan view of FIG.21(C) is observed from an arrow direction, the opening of FIG.21(A) was observed. At a separation operation time, the upper surface of the flow path excluding a solution storage section was closed by electrostatic bonding and used while using glass as the cover.

Mouse blood was separated using the separation device obtained as described above. Here, the blood was diluted ten times by PBS having a pH of 7.2, that is, 1.83 g of Na₂HPO₄, 0.2 g of NaH₂PO₄, and 9 g of NaCl dissolved in 1000 ml of water, and used.

The two flow paths formed in the separation device were loaded with the mouse blood, and separation of plasma components was attempted. That is:
A: The flow path 2 of FIG.21 was loaded by the blood diluted ten times by PBS, and the flow path 1 was loaded with PBS; and
B: The flow path 2 of FIG.21 was loaded by PBS, and the flow path 1 was loaded with the blood diluted ten times by PBS.
Therefore, the plasma component passed through the partition from the flow path 2 was separated into the flow path 1 in A, and the plasma component passed through the partition from the flow path 1 was separated toward a flow path 2 side in B. In this case, leakage of blood cells by partition passage was used as an index, and the efficiency in separation of each of A and B was checked.

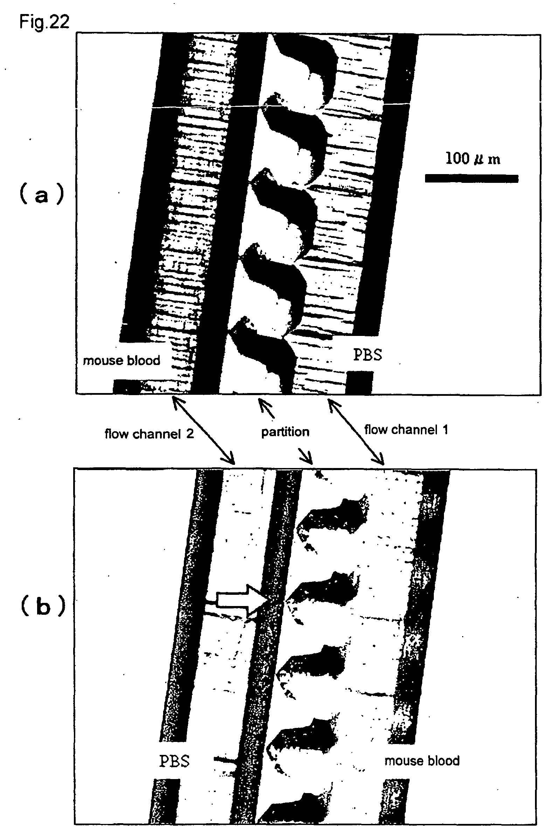

Results are shown in FIG.22. FIG.22(a) shows the result of the above A, and FIG.22(b) shows the result of the above B. For both A and B, the inflow of the blood automatically occurred by the capillary phenomenon, a moving speed of the blood was about 400 µm/s, and a moving speed of the blood cells was about 4600 blood cells/s. The time required for the separation was only two seconds as an inflow time by the capillary phenomenon. FIG.22 shows optical microscopic photographs in which the separated state was observed after the loading of the blood. For both A and B, the flow of the blood cells was observed as a large number of streaks along the flow path in the flow path into which the mouse blood was introduced.

In A, any leakage of the blood cells into the flow path 1 from the flow path 2 was not recognized. That is, the number of blood cells passed through the openings of the partition was 0. Accordingly, it was possible to selectively separate/collect the only plasma component from the blood.

On the other hand, in B, it was confirmed that only part of blood cells passed through the openings of the partition from the flow path 1, and the blood cells leaked into the flow path 2. An inflow speed of blood cells into the flow path 2 was 10 blood cells/seconds, and was 0.2% of that in the flow path 1. In FIG.22, the leaked blood cells were observed in a strip shape along the partition surface. Since the hole in the opening connecting the flow path 1 to the flow path 2 had a particles diameter of 6 µm at maximum, only part of red blood cells each having a size of about 8 µm were supposed to be deformed and passed. The red blood cells did not pass through the opening in A, and passed through the same opening in B. Therefore, it was confirmed that the separation flow path by the opening disposed in this shape functioned as the backflow prevention valve to have a one-way passage effect.

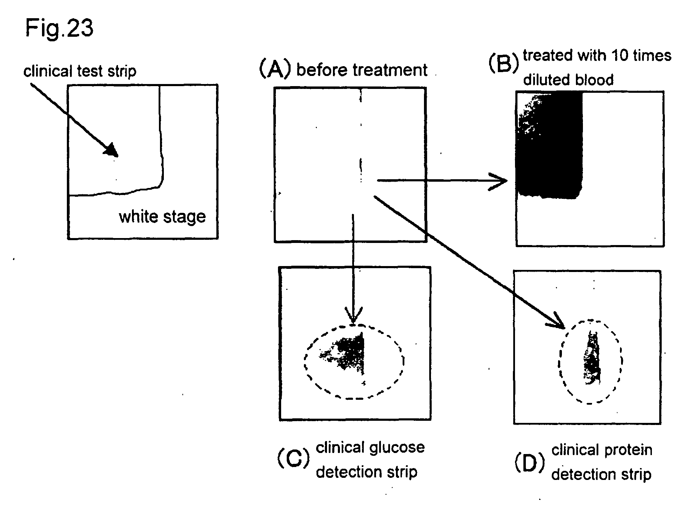

Moreover, the solution collected from the flow path 2 after performing the separation in the method A was allowed to contact glucose and protein test sheets of urine inspection test sheet Aution Stick (manufactured by Arcray Co.), then as shown in FIG.23, the glucose test sheet developed brown, and the protein test sheet turned to green. On the other hand, when the blood (ten times diluted) before the separation was allowed to contact the test sheet, the whole was stained in red, and it was impossible to detect the colors developed specifically to glucose and proteins. This result indicates that the plasma component is selectively separated into the flow path 2. Therefore, in the present embodiment, it was possible to easily confirm the separation of the plasma component by specific color detection.

From the above-described result, it has been confirmed that it is possible to separate the blood cell component from the plasma component in the blood in a short time by the capillary phenomenon and diffusion without using any external force. It is to be noted that from the above result, it is presumed that a direction of a deformable component capable of passing through the opening is determined in accordance with a difference of a required enthalpy increase amount by softness and space shape.

### [Example 2]

Also in the present example, the (110) Si substrate was used as the Si substrate in the same manner as in Example 1. A 35 nm thick silicon oxide film, and a 55 nm thick calixarene electron beam negative resist were formed on the (110) Si substrate. Two flow paths including the flow paths 1 and 2 were connected to each other via the openings disposed in the partition. In this structure, a partition section was formed into a shape shown in FIG.1. The flow path 1 corresponds to the flow channel 161a in FIG.1, and the flow path 2 corresponds to the flow channel 161b in FIG.1. An array region constituting the flow path of the sample was exposed using the electron beam. The development was performed using xylene, and the rinsing was performed by isopropyl alcohol.

Next, the silicon oxide film was RIE-etched using a mixed gas of CF₄ and CHF₃. After clearing/removing the resist by an organic solvent, an oxidation plasma treatment was performed. Next, when the silicon substrate was ECR-etched using HBr gas, the film thickness of the etched silicon substrate, that is, D in FIG.1 was 400 nm. Moreover, the wet etching was performed with buffered hydrofluoric acid (BHF) to remove the silicon oxide film.

The separation flow path of the separation device obtained as described above had a structure schematically shown in FIG.1, the width of the flow path 1 or 2, that is, W in FIG.1 was 100 µm, and the width of the separation flow path, that is, d1 in FIG.1 was 100 nm.

The separation device obtained in this manner was used to separate nucleic acids. Solutions containing nucleic acids having sizes of 100 bp and 10 kbp were used as the samples to be separated. The sample solution was introduced into the flow path 1, and moved in the flow path by the capillary phenomenon. Moreover, a carrier solvent was also introduced into the flow path 2, and moved in the flow path by the capillary phenomenon.

As a result of the analysis of the solution collected from the flow path 2, the only 100 bp nucleic acids were detected. From this result, it has been confirmed that the only nucleic acids having a size of 100 bp pass through the separation flow path, and is selectively collected among the components contained in the sample solution.

In the present example, the separation was performed using nucleic acids, but proteins may also similarly be separated using the separation device of the present invention.

Moreover, in the present example, the separation was performed by the capillary phenomenon without applying any external force to the flow path. For example, when the voltage is applied to the component that cannot easily pass through the separation flow path in a direction of the separation flow path, that is, the direction vertical to the width of the separation flow path, the separation efficiency can be enhanced.

### Industrial Applicability

According to the present invention, a separation device is realized in which a sample is separated by a simple operation with good efficiency. A technique is realized in which a sample containing a substance obtained from organisms is separated by the simple operation with high efficiency without denaturalizing any component. According to the present invention, a separation technique is realized by one device to separate a sample, in contrast to a conventional technique in which the sample has heretofore been separated and purified using a plurality of separation steps in multiple stages.

Furthermore, according to the present invention, various separation methods which have not been realized by related arts are realized.

## Claims

1. A separation device comprising a substrate having a first flow channel for the passage of a fluid as a sample to be separated, a second flow channel for the passage of a fluid containing a specific component separated from the fluid, and a partition for partitioning the first and second flow channels,
wherein the partition is provided with a plurality of separation flow paths which communicate with the first and second flow channels and which allows the passage of the only specific component contained in the fluid which passes along the first flow channel.

2. The separation device according to claim 1, wherein the substrate further comprises a third flow channel which is disposed adjacent to the second flow channel and which is for the passage of the fluid containing the specific component separated from the fluid which passes along the second flow channel; and a partition for partitioning the second and third flow channels, and
the partition comprises a plurality of separation flow paths which communicate with the second and third flow channels and which allows the passage of the only specific component contained in the fluid which passes along the second flow channel.

3. A separation device comprising a substrate having a plurality of flow channels, any portion of the plurality of flow channels being provided with an inlet of a sample, a partition interposed between adjacent flow channels being provided with a plurality of separation flow paths which communicate with the respective flow channels and which allows the passage of an only specific component contained in the sample.

4. The separation device according to claim 3, wherein three or more flow channels are disposed.

5. The separation device according to any one of claims 1 to 4, wherein the plurality of separation flow paths are formed in such a manner that only components having a predetermined size and smaller sizes are capable of passing therethrough.

6. The separation device according to any oneof claims 1 to 5, wherein the plurality of separation flow paths have about the same sectional shape and about the same sectional area.

7. The separation device according to any one of claims 1 to 6, wherein the separation flow path is a channel-shaped flow path formed in a substrate surface.

8. The separation device according to any one of claims 1 to 7, further comprising external force applying means for applying an external force to a fluid charged into each flow channel.

9. The separation device according to claim 8, wherein the external force applying means applies the external force in such a manner that a flow direction of the fluid in one flow channel and a flow direction of the fluid in another flow channel adjacent to the former flow channel are mutually opposite directions.

10. The separation device according to any one of claims 1 to 9, wherein an opening of the separation flow path on one flow channel side is enlarged as compared with the opening of the other flow channel side.

11. The separation device according to any one of claims 1 to 10, wherein the separation flow path is formed into a tapered shape from one flow channel side toward the other flow channel side.

12. The separation device according to any one of claims 1 to 11, wherein the separation flow path is disposed so as to form an acute angle to the flow direction of the fluid in one flow channel which communicates with the separation flow path and to form an obtuse angle to the flow direction of the fluid in the other flow channel.

13. The separation device according to any one of claims 1 to 12, wherein concave portions are formed in an inner wall of the separation flow path.

14. The separation device according to any one of claims 1 to 13, wherein the flow channel and the separation flow channel are channels formed by etching.

15. The separation device according to any one of claims 1 to 14, wherein the inner wall of one flow channel has a hydrophilic surface, and the inner wall of a flow channel adjacent to the flow channel has a hydrophobic surface.

16. The separation device according to any one of claims 1 to 15, further comprising driving means for applying driving force of a direction different from a traveling direction of the flow channel to the fluid.

17. The separation device according to any one of claims 1 to 16, further comprising a cover on the substrate, the surface of the cover being a hydrophobic surface.

18. The separation device according to any one of claims 1 to 17, further comprising a separation region, disposed in at least one of the flow channels, for separating the sample to be separated.

19. A separation device comprising a plurality of flow channels; and a partition interposed between flow channels adjacent to each other among these flow channels, the partition being provided with a plurality of separation flow paths which communicate with the flow channels adjacent to each other, wherein a water absorption material is disposed in at least one of the flow channels.

20. A separation device comprising a plurality of flow channels; and a partition interposed between flow channels adjacent to each other among these flow channels, the partition being provided with a plurality of separation flow paths which communicate with the flow channels adjacent to each other, wherein a water absorption material is disposed in at least two flow channels adjacent to each other among these flow channels, the water absorption materials disposed in the respective flow channels have water absorbing powers different from each other, and the flow channels including the water absorption materials are arranged in accordance with the order of the water absorbing power.

21. A separation device comprising a substrate in which a flow channel is disposed, wherein a bank portion is disposed along a traveling direction of the flow channel so as to divide the flow channel on the bottom surface of the flow channel, and a height of the bank portion is smaller than a depth of the flow channel.

22. A separation device comprising a substrate in which a flow channel is disposed; and a cover on the substrate, wherein a bank portion is disposed so as to divide the flow channel on the surface of the cover on the side of the substrate in a state in which the substrate abuts on the cover, and a height of the bank portion is smaller than a depth of the flow channel.

23. The separation device according to any one of claims 1 to 22, wherein the separation flow path is formed by an anodization process.

24. The separation device according to any one of claims 1 to 22, wherein the partition is a metal film which is oxidized by an anodization process and in which a large number of concave portions are disposed.

25. A separation device comprising a substrate; a first flow channel disposed on the substrate; a second flow channel disposed adjacent to the first flow channel on the substrate; a third flow channel disposed adjacent to the second flow channel on the substrate; a partition disposed between the first and second flow channels and having a plurality of openings; and a partition disposed between the second and third flow channels and having a plurality of openings, wherein a porous body is filled in the second flow channel.

26. An analysis system for detecting a specific component, comprising the separation device according to any one of claims 1 to 25; and a detection section for detecting the specific component separated by the separation device.

27. A method of manufacturing a separation device, comprising a step of disposing a mask patterned in a predetermined shape on a substrate surface; and a step of etching the substrate surface by the use of the mask to form a plurality of flow channels and a plurality of separation flow paths which communicate with the adjacent flow channels.

28. A method of separating a specific component from a fluid as a sample to be separated by the use of a separation device comprising first and second flow channels and a partition interposed between these flow paths, the partition being provided with a plurality of separation flow paths which communicate with the first and second flow channels, the method comprising:
a step of moving the fluid as the sample to be separated in the first flow channel and moving the specific component contained in the sample to be separated into the second flow channel via the separation flow path.

29. The separation method according to claim 28, wherein the plurality of separation flow paths are formed in such a manner that only components having a predetermined size and smaller sizes are capable of passing therethrough.

30. The separation method according to claim 28 or 29, wherein the specific component is a protein or DNA.

31. A method of separating a specific component from a fluid as a sample to be separated by the use of a separation device comprising first and second flow channels and a partition interposed between these flow paths, the partition being provided with a plurality of separation flow paths which communicate with the first and second flow channels, the method comprising:
a step of moving, in the first flow channel, the fluid as the sample to be separated and reactive particles which react with the specific component contained in the fluid as the sample to be separated to discharge a reaction product;
a step of reacting the specific component with the reactive particles to discharge the reaction product from the reactive particles; and
a step of collecting the reaction product via the first or second flow channel.

32. A method of separating a specific component from a fluid as a sample to be separated by the use of a separation device comprising first and second flow channels and a partition interposed between these flow paths, the partition being provided with a plurality of separation flow paths which communicate with the first and second flow channels, the method comprising:
a step of introducing, into the first flow channel, reactive particles which react with the specific component contained in the fluid as the sample to be separated to discharge a reaction product, and immobilizing the reactive particles in the separation flow path;
a step of moving the fluid as the sample to be separated in the second flow channel and the separation flow path;
a step of reacting the specific component contained in the sample to be separated with the reactive particles to discharge the reaction product from the reactive particles; and
a step of collecting the reaction product via the first or second flow channel.

33. The separation method according to claim 31 or 32, wherein the reactive particles are cells.

34. The separation method according to claim 31 or 32, wherein the reactive particles contain polymeric beads or glass beads, and an enzyme or substrate corresponding to the specific component.

35. The separation method according to any one of claims 31 to 34, wherein the reaction is a color development reaction.

36. A method of separating a specific component from a fluid as a sample to be separated by the use of a separation device comprising first and second flow channels and a partition interposed between these flow paths, the partition being provided with a plurality of separation flow paths which communicate with the first and second flow channels, the method comprising:
a step of moving, in the first flow channel, the fluid as the sample to be separated and binding particles which specifically bind to the specific component contained in the fluid as the sample to be separated;
a step of binding the specific component to the binding particles; and
a step of releasing the specific component from the binding particles to collect the specific component via the first or second flow channel.

37. A method of separating a specific component from a fluid as a sample to be separated by the use of a separation device comprising first and second flow channels and a partition interposed between these flow paths, the partition being provided with a plurality of separation flow paths which communicate with the first and second flow channels, the method comprising:
a step of introducing, into the first flow channel, binding particles which specifically bind to the specific component contained in the fluid as the sample to be separated, and immobilizing the binding particles in the separation flow paths;
a step of moving the fluid as the sample to be separated in the second flow channel and the separation flow paths to bond the specific component contained in the fluid as the sample to be separated to the binding particles; and
a step of releasing the specific component from the binding particles to collect the specific component via the first or second flow channel.

38. The separation method according to claim 36 or 37, wherein the specific component is bonded to the binding particles which specifically bind to the specific component by any of antigen-antibody, enzyme-substrate, sugar chain-lectin, chromosome and nucleotide chain-nucleotide chain.

39. The separation method according to any one of claims 36 to 38, further comprising a step of developing a color of the binding particles which specifically bind to the specific component.

40. The separation device according to any one of claims 28 to 39, wherein the sample to be separated is a sample or a treated material obtained from organisms.

41. A method of separating a specific component from a fluid as a sample to be separated by the use of a separation device comprising a plurality of flow paths and a partition interposed between flow paths adjacent to each other among these flow paths, the partition being provided with a plurality of separation flow paths which communicate with the flow paths adjacent to each other, the method comprising:
a step of moving the fluid as the sample to be separated in any of the flow paths and moving the specific component contained in the sample to be separated into the other flow path via the separation flow path; and a step of applying driving force of a direction different from a traveling direction of the flow path.

42. The separation method according to claim 41, wherein pressures of two directions different from the traveling direction of the flow path are alternately applied to the fluid at a predetermined interval.

43. The separation method according to claim 41 or 42, wherein the pressure is applied by the use of an electroosmosis.

44. The separation method according to claim 41, wherein the pressure is an osmotic pressure.

45. A method of analyzing a sample to be analyzed by the use of the separation device according to claim 18, the method comprising a first step of introducing the sample to be analyzed into a flow channel in which a separation region is disposed to separate the sample to be analyzed in the flow channel; and a second step of introducing a fluid containing a detection reagent for detecting the sample to be analyzed into a flow channel adjacent to the flow channel in which the separation region is disposed.

46. The analysis method according to claim 45, wherein the sample to be analyzed contains a plurality of isozymes.

47. A separation method by the use of the separation device according to claim 2, comprising the steps of:
passing a fluid having an osmotic pressure higher than that of a fluid as the sample to be separated along the second flow channel; and
passing, along the third flow channel, a fluid having an osmotic pressure higher than that of a fluid which passes along the second flow channel.
